# EUROPEAN PATENT SPECIFICATION

(11) **EP 3 856 864 B1**
(45) Date of publication and mention of the grant of the patent: **02.12.2026**
(21) Application number: 19879572.6
(22) Date of filing: 31.10.2019
(51) Int. Cl.: C09K 8/12, C09K 8/06, C09K 8/04, C09K 8/02, C09K 8/52, C09K 8/60

(54) **METHODS AND COMPOSITIONS FOR ENHANCED OIL RECOVERY**
VERFAHREN UND ZUSAMMENSETZUNGEN ZUR ERHÖHTEN ÖLRÜCKGEWINNUNG
PROCÉDÉS ET COMPOSITIONS POUR UNE RÉCUPÉRATION ASSISTÉE DU PÉTROLE

(30) Priority: 31.10.2018 US 201862753411 P
(43) Date of publication of application: 04.08.2021
(73) Proprietor: Sterling Specialty Chemicals Holding UK Limited, Harrow, Middlesex HA1 1BE (GB)
(72) Inventor: LUO, Yuping, Johns Creek, Georgia 30097 (US); QI, Pengpeng, Atlanta, Georgia 30313 (US)
(74) Representative: Page White Farrer
(86) International application number: PCT/US2019/059042
(87) International publication number: WO 2020/092697

(56) References cited:
- WO-A1-2010/105070
- WO-A1-2010/144588
- WO-A1-2014/082001
- US-A- 4 665 987
- US-A1- 2010 184 630
- WILLHITE ET AL.: "Development of Polymer Gel Systems to Improve Volumetric Sweep and Reduce Producing Water/Oil Ratios", March 2006 (2006-03-01), XP055729220, Retrieved from the Internet <URL:https://www.osti.gov/servlets/purl/823008> [retrieved on 20191216]

## Description

The present invention relates to a method of effecting *in situ* gelation of one or more degraded *in situ* gelable polymers at a desired location, as recited in claim 1. The method of the invention may be used in various further methods, *e.g.,* during enhanced oil recovery, *e.g.,* chemical enhanced oil recovery, and/or during conformance control, *e.g.,* as a conformance control agent, and/or during mobility control, *e.g.,* as a mobility control agent.

### BACKGROUND

Enhanced oil recovery (EOR) generally refers to techniques and processes that can be used to increase the amount of unrefined petroleum (for example, crude oil) that may be extracted from an oil reservoir (for example, an oil field). By way of example, using EOR, about 40-60% of the reservoir's original oil can typically be extracted, compared with only 20-40% using traditional primary and secondary recovery techniques (for example, by water injection or natural gas injection). However, many reservoirs from which oil and gas may be produced may be heterogenous in their geologic properties (*e.g*. porosity and/or permeability). For some reservoirs, permeability differences among the different geologic layers can vary as much as several orders of magnitude

In general a fluid, such as water, may be injected into an injection well. The injected water may mobilize and push some of the oil in place to a nearby production well where the oil and injected fluid may be co-produced. A high degree of heterogeneity in the permeability among the geologic layers of rock that contain oil within its porous spaces in the subsurface reservoir may cause such water injections to lack uniformity, with the larger proportion of the water entering into higher permeability geologic layers, which may lead to non-uniform displacement of the oil within the reservoir, such that most of the oil may be quickly mobilized from high permeability layers and little mobilized from the lower permeability layers. Such conditions may result in fluid exiting production wells having a higher than desired percentage of water and a lower than desired percentage of oil. Based on the foregoing, it is desirable to develop compositions and methods for use with EOR processes that improve the recovery of the large volume of oil that may remain in the bypassed and not yet swept lower permeability regions of a reservoir, and that minimize the loss of water from production wells during EOR processes.

Willhite et al., reports "Development of Polymer Gel Systems to Improve Volumetric Sweep and Reduce Producing Water/Oil Ratios", March 2006, https://www.osti.gov/servlets/purl/823008. WO 2014/082001 A1 (published 30 May 2014) reports "Crosslinking of Swellable Polymer with PEI". WO 2010/144588 A1 (published 16 December 2010) reports "Swellable Polymer with Anionic Sites". WO 2010/105070 A1 (published 16 September 2010) reports "Crosslinked Swellable Polymer".

### BRIEF SUMMARY

The present invention provides a method of effecting *in situ* gelation of one or more degraded *in situ* gelable polymers at a desired location, comprising (i) providing one or more polyacrylamide-based polymers, wherein said polymers optionally comprise one or more acrylamide monomers and one or more acrylic acid monomers; (ii) contacting an aqueous solution or aqueous composition, such as a brine, with said one or more polymers; (iii) contacting said aqueous solution or composition with one or more degradation agents which comprise a ferrous (iron (II)) or ferric compound to degrade said one or more polymers into one or more polymers comprising reduced molecular weight fragments; (iv) contacting said aqueous solution or composition with one or more crosslinkers comprising a glyoxal and/or a glyoxalating agent; (v) optionally adjusting the pH of said solution or composition to a desired value by adding one or more buffers, such as an alkaline buffer; (vi) introducing or injecting the resultant degraded *in situ* gelable polymer containing solution or composition into a desired location where *in situ* gelation of said one or more degraded *in situ* gelable polymers is to occur; and (vii) allowing for or providing conditions at the desired location which permit gelation of the one or more degraded *in situ* gelable polymers to occur over time. In some embodiments, said desired location may be an anaerobic environment. In some embodiments, said desired location may be substantially free of oxygen. In some embodiments, said degraded *in situ* gelable polymer containing solution or composition may be substantially free of oxygen. In some embodiments, said degraded *in situ* gelable polymer containing solution or composition may be sparged e.g., sparged with nitrogen. In some embodiments, said degraded *in situ* gelable polymer containing solution or composition comprises one or more oxygen scavengers, e.g., said oxygen scavengers comprise one or more compounds comprising sulfite and/or bisulfite. In some embodiments, said polyacrylamide-based polymer may be provided in dry form. In some embodiments, said polyacrylamide-based polymer may comprise one or more acrylamide monomers and one or more acrylic acid monomers. In some embodiments, said polyacrylamide-based polymer may comprise one or more anionic monomers. In some embodiments, said polyacrylamide-based polymer may comprise any one or more of the following: acrylic acid, beta-carboxyethyl acrylate, sodium 1-allyloxy-2-hydroxy propane sulphonate, 3-Allyloxy-2-hydroxypropane sulfonate sodium salt, vinylsulfonic acid sodium salt. acrylamide tertiary butyl sulfonic acid (also known as 2-acrylamido-2-methylpropane sulfonic acid or N-t-butyl acrylamide sulfonic acid) ("ATBS"); vinylsulfonic acid; 4-styrenesulfonic acid. In some embodiments, step (iv) may occur before, during, or after step (iii). In some embodiments, step (iii) may occur before step (iv), and optionally wherein a one hour incubation period occurs after step (iii) and before step (iv). In some embodiments, step (iv) may occur before step (iii). In some embodiments, step (iv) may occur during step (iii). In some embodiments, step (iv) may occur after step (iii). In some embodiments, step (v) may occur after steps (i)-(iv). In some embodiments, step (iv) may occur before and during step (iii). In some embodiments, step (iv) may occur during and after step (iii). In some embodiments, step (iv) may occur before, during, and after step (iii).

In some embodiments, gelation may occur after a desired amount of time. In some embodiments, gelation may occur after 5 days or less, 5 days or more, 6 days or more, 7 days or more, 8 days or more, 9 days or more, 10 days or more, 11 days or more, 12 days or more, 13 days or more, 14 days or more, 3 weeks or less, 3 weeks or more, 4 weeks or more, 5 weeks or more, 6 weeks or more, 7 weeks or more, or 8 weeks or more. In some embodiments, at least one of said one or more polymers of step (i) may have a molecular weight of about 10 million Da or less, about 11 million Da or less, about 12 million Da or less, about 13 million Da or less, about 14 million Da or less, about 15 million Da or less, or about 15 million Da or more. In some embodiments, step (iii) may result in at least one of said one or more polymers having a molecular weight of about 1 million Da or less, about 2 million Da or less, about 3 million Da or less, about 4 million Da or less, about 5 million Da or less, about 6 million Da or less, or more than about 6 million Da. In some embodiments, the degradation agent may comprise one or more of the following: a ferrous salt, a ferric salt, a ferrous salt having an organic anion, a ferrous salt having an inorganic anion, ferrous chloride, ferrous bromide, ferrous fluoride, ferrous sulfate, ammonium iron sulfate, a ferric salt having an organic anion, a ferric salt having an inorganic anion, ferric citrate, ferric chloride, ferric bromide, ferric fluoride, ferric sulfate, and combinations or mixtures thereof. In some embodiments, said degradation agent may comprise a ferrous (iron (II)) compound. In some embodiments, said degradation agent may comprise iron (II) sulfate. In some embodiments, crosslinking of said one or more degraded *in situ* gelable polymers may occur following introduction into a desired location. In some embodiments, the degradation agent may comprise iron II sulfate. In some embodiments, step (iv) may comprise adding 5 wt% or less, 10 wt% or less, 15 wt% or less, 20 wt% or less, 25 wt% or less, 30 wt% or less, 35 wt% or less, 40 wt% or less, 45 wt% or less, 50 wt% or less, 55 wt% or less, 60 wt% or less, 65 wt% or less, 70 wt% or less, 75 wt% or less, 80 wt% or less, or 80 wt% or more of said glyoxal and/or glyoxalating agent to said aqueous solution or aqueous composition, e.g., wherein the wt% is a dry weight percentage. In some embodiments, the desired location or solution or composition comprising the degraded *in situ* gelable polymers may comprise one or more conditions or constituents which favor or permit gelation of the degraded *in situ* gelable polymers over time, e.g., wherein said conditions or constituents include the molecular weight of the degraded *in situ* gelable polymers; polymer concentration of the degraded *in situ* gelable polymers in the solution or at the location where gelation is to occur; crosslinker dosage or concentration; and alkalinity of the degraded *in situ* gelable polymer containing solution or of the environment where the degraded *in situ* gelable polymer containing solution is introduced. In some embodiments, after gelation the resultant gelation viscosity or gel strength may approximate that of a non-degraded glyoxalated polyacrylamide ("GPAM") gel, e.g., the resultant gelation viscosity or gel strength and the non-degraded glyoxalated polyacrylamide ("GPAM") gelation viscosity or gel strength may be 10² mPa·s (10² cPs) or less, 10² mPa·s (10² cPs) or more, 10³ mPa·s (10³ cPs) or more, 10⁴ mPa·s (10⁴ cPs) or more, or 10⁵ mPa·s (10⁵ cPs) or more. In some embodiments. In some embodiments, the polyacrylamide-based polymers; prior to degradation and/or *in situ* gelation; comprises a backbone comprising a molecular weight of 10 to 15 million. In some embodiments, the resultant gelation viscosity or gel strength and the non-degraded glyoxalated polyacrylamide ("GPAM") gelation viscosity or gel strength may be 10² mPa·s (10² cPs) or less, 10² mPa·s (10² cPs) or more, 10³ mPa·s (10³ cPs) or more, 10⁴ mPa·s (10⁴ cPs) or more, or 10⁵ mPa·s (10⁵ cPs) or more. In some embodiments, the resultant gels may be stable for 1 month or less, 1 month or more, 2 months or more, 3 months or more, 4 months or more, 5 months or more, or 6 months or more. In some embodiments, the amount of degradation agent used to contact said aqueous solution or composition may be an amount that results in at least one of said one or more polymers having a molecular weight between about 1 million and about 6 million Da. In some embodiments, the viscosity of the aqueous solution or aqueous composition which comprises said one or more degraded *in situ* gelable polymers prior to gelation and/or introduction into said desired location may have a viscosity of 5 mPa·s (5 cPs) or less, 6 mPa·s (6 cPs) or less, 7 mPa·s (7 cPs) or less, 8 mPa·s (8 cPs) or less, 9 mPa·s (9 cPs) or less, 10 mPa·s (10 cPs) or less 12.5 mPa·s (12.5 cPs) or less, 15 mPa·s (15 cPs) or less, 20 mPa·s (20 cPs) or less, 25 mPa·s (25 cPs) or less, 30 mPa·s (30 cPs) or less, 35 mPa·s (35 cPs) or less, 40 mPa·s (40 cPs) or less, 45 mPa·s (45 cPs) or less, 50 mPa·s (50 cPs) or less, 55 mPa·s (55 cPs) or less, 60 mPa·s (60 cPs) or less, 65 mPa·s (65 cPs) or less, 70 mPa·s (70 cPs) or less, 75 mPa·s (75 cPs) or less, 80 mPa·s (80 cPs) or less, 85 mPa·s (85 cPs) or less, 90 mPa·s (90 cPs) or less, 95 mPa·s (95 cPs) or less, 100 mPa·s (100 cPs) or less, or 100 mPa·s (100 cPs) or more. In some embodiments, the viscosity of the aqueous solution or aqueous composition which comprises one or more degraded *in situ* gelable polymers may increase once introduced into a desired location relative to its viscosity prior to introduction. In some embodiments, the viscosity of an aqueous solution or aqueous composition which comprises one or more degraded *in situ* gelable polymer may be 10² mPa·s (10² cPs) or less, 10² mPa·s (10² cPs) or more, 10³ mPa·s (10³ cPs) or more, 10⁴ mPa·s (10⁴ cPs) or more, or 10⁵ mPa·s (10⁵ cPs) or more after a desired amount of time has passed following introduction of said solution or composition into said desired location.

In one embodiment said *in situ* gelation of one or more degraded *in situ* gelable polymers is effected at a desired location during enhanced oil recovery, and the enhanced oil recovery method optionally further includes, after effecting gel formation, performing one or more polymer floods and/or one or more waterfloods. The present disclosure also generally encompasses a method of enhanced oil recovery using the method of claim 1, comprising a. introduction of one or more degraded *in situ* gelable polymers into a desired location; b. formation of a gel comprising said one or more degraded *in situ* gelable polymers, and c. after gel formation, effecting one or more polymer floods and/or waterfloods, wherein the oil recovery effected by said one or more polymer floods and/or one or more waterfloods is increased as a result of the gels formed by said one or more degraded *in situ* gelable polymers as compared to a method which did not comprise use of said one or more degraded *in situ* gelable polymers. The present disclosure generally relates to a method of enhanced oil recovery using the method of claim 1, further comprising: a. performing one or more polymer floods and/or water floods; b. introducing one or more degraded *in situ* gelable polymers into a desired location; c. gelation of said one or more degraded *in situ* gelable polymers, and d. after gel formation, effecting one or more polymer floods and/or waterfloods, wherein the oil recovery effected by said one or more polymer floods and/or one or more waterfloods is increased as a result of the gels formed by said one or more degraded *in situ* gelable polymers as compared to a method which did not comprise use of said one or more degraded *in situ* gelable polymers. Moreover, the present disclosure generally relates to a method of enhanced oil recovery using the method of claim 1, further comprising: (i) providing a formulation comprising one or more degraded *in situ* gelable polymers or a composition containing as discussed herein, and (ii) delivering the formulation into the oil source, whereby the formulation enhances oil recovery from the oil source. The present disclosure also generally relates to method of enhanced oil recovery using the method of claim 1, further comprising: (i) obtaining or providing a composition comprising one or more degraded *in situ* gelable polymers; (ii) placing the composition in a subterranean formation downhole; (iii) allowing sufficient time for the one or more degraded *in situ* gelable polymers to set or gel and (iv) extracting material comprising petroleum from the subterranean formation downhole via a production wellbore. Furthermore, the present disclosure generally pertains to a method for remediation of a zone within a subterranean formation bearing heavy/viscous oil to inhibit breakthrough of water from a water injection well via the zone into a production well, the zone comprised of a void space, a halo region, or both, within the zone due to production of the heavy/viscous oil through the production well, the zone thereby allowing for pressure communication between the injection well and the production well, the method using the method of claim 1 and further comprising: (i) injecting a composition into the zone via the injection well, the composition comprising one or more degraded *in situ* gelable polymers or a composition as described herein; (ii) allowing the one or more degraded *in situ* gelable polymers to set or gel for a time sufficient to form a plug which reduces flow communication of water between the injection well and the production well.

Also described herein but not recited in the claims is a composition suitable for use in enhanced oil recovery, wherein said composition comprises one or more degraded *in situ* gelable polymers and an aqueous fluid. In some examples, said composition may be suitable for use as a conformance control agent. In some examples, said composition may be suitable for use as a mobility control agent. In some examples, at least one of said one or more degraded *in situ* gelable polymers may comprise one or more anionic monomers. In some examples, at least one of said one or more degraded in situ gelable polymers may comprise any one or more of the following anionic monomers: acrylic acid, beta-carboxyethyl acrylate, sodium 1-allyloxy-2-hydroxy propane sulphonate, 3-Allyloxy-2-hydroxypropane sulfonate sodium salt, vinylsulfonic acid sodium salt. acrylamide tertiary butyl sulfonic acid (also known as 2-acrylamido-2-methylpropane sulfonic acid or N-t-butyl acrylamide sulfonic acid) ("ATBS"); vinylsulfonic acid; 4-styrenesulfonic acid. In some examples, at least one of said one or more degraded *in situ* gelable polymers may comprise one or more acrylic acid monomers. In some examples, at least one of said one or more degraded *in situ* gelable polymers may comprise from 15 mol percent to 30 mol percent of one or more anionic monomers. In some examples, at least one of said one or more degraded *in situ* gelable polymers may comprise one or more glyoxal groups, wherein the glyoxal groups may be introduced through any known glyoxalation reaction and/or comprises any known glyoxal sequence. In some examples, said composition comprising one or more degraded *in situ* gelable polymers may be prepared by (i) providing one or more polyacrylamide-based polymers, wherein said polymers optionally comprises one or more acrylamide monomers and one or more acrylic acid monomers; (ii) contacting an aqueous solution or aqueous composition, such as a brine, with said one or more polymers; (iii) contacting said aqueous solution or composition with one or more degradation agents, which degrade said one or more polymers into one or more polymers comprising reduced molecular weight fragments; (iv) contacting said aqueous solution or composition with one or more crosslinkers comprising a glyoxal and/or a glyoxalating agent; and (v) optionally adjusting the pH of said solution or composition to a desired value by adding one or more buffers, such as an alkaline buffer. In some examples, at least one of said one or more degraded *in situ* gelable polymers may comprise 5 wt% or less, 10 wt% or less, 15 wt% or less, 20 wt% or less, 25 wt% or less, 30 wt% or less, 35 wt% or less, 40 wt% or less, 45 wt% or less, 50 wt% or less, 55 wt% or less, 60 wt% or less, 65 wt% or less, 70 wt% or less, 75 wt% or less, 80 wt% or less, or 80 wt% or more of glyoxal and/or glyoxalating agent. In some examples, the molecular weight of said one or more degraded *in situ* gelable polymers may be between about 1 million and about 6 million Da. In some examples, said composition may comprise 0.5% active degraded *in situ* gelable polymer. In some examples, the viscosity of said composition which comprises one or more degraded *in situ* gelable polymers may be about 5 mPa·s (5 cPs) or less, about 6 mPa·s (6 cPs) or less, about 7 mPa·s (7 cPs) or less, about 8 mPa·s (8 cPs) or less, about 9 mPa·s (9 cPs) or less, about 10 mPa·s (10 cPs) or less about 12.5 mPa·s (12.5 cPs) or less, about 15 mPa·s (15 cPs) or less, about 20 mPa·s (20 cPs) or less, about 25 mPa·s (25 cPs) or less, about 30 mPa·s (30 cPs) or less, about 35 mPa·s (35 cPs) or less, about 40 mPa·s (40 cPs) or less, about 45 mPa·s (45 cPs) or less, about 50 mPa·s (50 cPs) or less, about 55 mPa·s (55 cPs) or less, about 60 mPa·s (60 cPs) or less, about 65 mPa·s (65 cPs) or less, about 70 mPa·s (70 cPs) or less, about 75 mPa·s (75 cPs) or less, about 80 mPa·s (80 cPs) or less, about 85 mPa·s (85 cPs) or less, about 90 mPa·s (90 cPs) or less, about 95 mPa·s (95 cPs) or less, about 100 mPa·s (100 cPs) or less, or more than about (100 cPs) prior to introduction of said composition to a desired location. In some examples, said composition may form a gel once in a desired location after a desired period of time. In some examples, said desired location may be an anaerobic environment. In some examples, the viscosity of said composition which comprises one or more degraded *in situ* gelable polymers may be about 10² mPa·s (10² cPs) or less, about 10² mPa·s (10² cPs) or more, about 10³ mPa·s (10³ cPs) or more, about 10⁴ mPa·s (10⁴ cPs) or more, or about 10⁵ mPa·s (10⁵ cPs) or more, a desired amount of time following introduction of said solution or composition into a desired location. In some examples, said composition may form a gel once in a desired location and said gel formation may occur after 5 days or less, 5 days or more, 6 days or more, 7 days or more, 8 days or more, 9 days or more, 10 days or more, 11 days or more, 12 days or more, 13 days or more, 14 days or more, 3 weeks or less, 3 weeks or more, 4 weeks or more, 5 weeks or more, 6 weeks or more, 7 weeks or more, or 8 weeks or more following introduction into said desired location. In some examples, said composition forms a gel once in a desired location and said gel may be stable for 1 month or less, 1 month or more, 2 months or more, 3 months or more, 4 months or more, 5 months or more, or 6 months or more following its formation in said desired location. In some examples, the pH of a composition comprising one or more degraded *in situ* gelable polymers may influence the solution-gelation transition. In some examples, compositions comprising a higher degree of alkalinity as compared to other compositions comprising one or more degraded *in situ* gelable polymers may result in a shorter period, the same time period, or a longer time period in which a gel forms. In some examples, said composition may be substantially free of oxygen. In some examples, wherein said composition may be sparged, e.g., sparged with nitrogen. In some examples, said composition may comprise one or more oxygen scavengers, e.g., said one or more oxygen scavengers comprise one or more compounds comprising sulfite and/or bisulfite.

### BRIEF DESCRIPTION OF THE SEVERAL VIEWS OF THE DRAWING

**Figure 1** illustrates viscosity measurements that were taken during an aging experiment performed in accordance with Example 2.
**Figure 2** illustrates viscosity measurements that were taken at two different shear rates in accordance with Example 2.

### DETAILED DESCRIPTION

### DEFINITIONS

As used herein the singular forms "a", "and", and "the" include plural referents unless the context clearly dictates otherwise. All technical and scientific terms used herein have the same meaning as commonly understood to one of ordinary skill in the art to which this invention belongs unless clearly indicated otherwise.

As used herein, the term "enhanced oil recovery" or "EOR" (sometimes also known as improved oil recovery ("IOR") or tertiary mineral oil production) generally refers to techniques for increasing the amount of unrefined petroleum (for example, crude oil) that may be extracted from an oil reservoir, such as an oil field. Examples of EOR techniques include, for example, miscible gas injection (e.g., carbon dioxide flooding), chemical injection, which is sometimes referred to as chemical enhanced oil recovery ("CEOR"), and which includes, for example, polymer flooding, alkaline flooding, surfactant flooding, micellar polymer flooding, conformance control operations, as well as combinations thereof such as alkaline-polymer flooding or alkaline-surfactant-polymer flooding, microbial injection, and thermal recovery (e.g., cyclic steam, steam flooding, or fire flooding). In some embodiments, the EOR operation may include a polymer ("P") flooding operation, an alkaline-polymer ("AP") flooding operation, a surfactant-polymer ("SP") flooding operation, an alkaline-surfactant-polymer ("ASP") flooding operation, a conformance control operation, or any combination thereof.

As used herein, the terms "polymer flood" or "polymer flooding" generally refer to a chemical enhanced EOR technique that typically involves injecting an aqueous fluid that is viscosified with one or more water-soluble polymers through injection boreholes into an oil reservoir to mobilize oil left behind after primary and/or secondary recovery. As a general result of the injection of one or more polymers, the oil may be forced in the direction of the production borehole, and the oil may be produced through the production borehole. Details of examples of polymer flooding and of polymers suitable for this purpose are disclosed, for example, in "Petroleum, Enhanced Oil Recovery, Kirk-Othmer, Encyclopedia of Chemical Technology, online edition, John Wiley & Sons, 2010". One or more surfactants may be injected (or formed *in situ*) as part of the EOR technique. Surfactants may function to reduce the interfacial tension between the oil and water, which may reduce capillary pressure and improve mobilization of oil. Surfactants may be injected with polymers (*e.g*., a surfactant-polymer (SP) flood), or formed in-situ (*e.g.,* an alkaline-polymer (AP) flood), or a combination thereof (*e.g.,* an alkaline-surfactant-polymer (ASP) flood). As used herein, the terms "polymer flood" and "polymer flooding" encompass all of these EOR techniques.

As used herein, the term "monomer" generally refers to nonionic monomers, anionic monomers, cationic monomers, zwitterionic monomers, betaine monomers, and amphoteric ion pair monomers.

As used herein, the terms "polymer," "polymers," "polymeric," and similar terms are used in their ordinary sense as understood by one skilled in the art, and thus may be used herein to refer to or describe a large molecule (or group of such molecules) that may comprise recurring units. Polymers may be formed in various ways, including by polymerizing monomers and/or by chemically modifying one or more recurring units of a precursor polymer. Unless otherwise specified, a polymer may comprise a "homopolymer" that may comprise substantially identical recurring units that may be formed by various methods *e.g*., by polymerizing a particular monomer. Unless otherwise specified, a polymer may also comprise a "copolymer" that may comprise two or more different recurring units that may be formed by, *e.g*., copolymerizing, two or more different monomers, and/or by chemically modifying one or more recurring units of a precursor polymer. Unless otherwise specified, a polymer or copolymer may also comprise a "terpolymer" that may comprise polymers that may comprise three or more different recurring units. The term "polymer" as used herein is intended to include both the acid form of the polymer as well as its various salts. Polymers may be amphoteric in nature, *i.e.,* containing both anionic and cationic substituents, although not necessarily in the same proportions.

As used herein the term "nonionic monomer" generally refers to a monomer that possesses a neutral charge. Nonionic monomers may comprise but are not limited to comprising monomers selected from the group consisting of acrylamide ("AMD"), acrylic, methacrylic, methacrylamido, vinyl, allyl, ethyl, all of which may be substituted with a side chain selected from, for example, an alkyl, arylalkyl, dialkyl, ethoxyl, and/or hydrophobic group. In some embodiments, a nonionic monomer may comprise AMD. In some embodiments, nonionic monomers may comprise but are not limited to comprising vinyl amide (*e.g*., acrylamide, methacrylamide, N-methylacrylamide, N,N-dimethylacrylamide), acryloylmorpholine, acrylate, maleic anhydride, N-vinylpyrrolidone, vinyl acetate, N-vinyl formamide and their derivatives, such as hydroxyethyl (methyl)acrylate CH2=CR--COO--CH2CH2OH (I) and CH2=CR--CO-N(Z1)(Z2) (2) N-substituted (methyl)acrylamide (II). R=H or Me; Z1=5-15C alkyl; 1-3C alkyl substituted by 1-3 phenyl, phenyl or 6-12C cycloalkyl (both optionally substituted) and Z2=H; or Z1 and Z2 are each 3-10C alkyl; (II) is N-tert. hexyl, tert. octyl, methylundecyl, cyclohexyl, benzyl, diphenylmethyl or triphenyl acrylamide. Nonionic monomers further may include dimethylaminoethylacrylate ("DMAEMA"), dimethylaminoethyl methacrylate ("DMAEM"), N-isopropylacrylamide and N-vinyl formamide. Nonionic monomers can be combined, for example to form a terpolymer of acrylamide, N-vinyl formamide, and acrylic acid.

As used herein, the term "anionic monomers" includes anionic monomers that are substantially anionic in whole or (in equilibrium) in part, at a pH in the range of about 4.0 to about 9.0. The "anionic monomers" may be neutral at low pH (from a pH of about 2 to about 6), or to anionic monomers that are anionic at low pH.

Examples of anionic monomers which may be used herein which further may be substituted with other groups include but are not limited to those comprising acrylamide ("AMD"), acrylic, methacrylic, methacrylamido, vinyl, allyl, ethyl; maleic monomers; calcium diacrylate; and/or any monomer substituted with a carboxylic acid group or salt thereof. In some embodiments, these anionic monomers may be substituted with a carboxylic acid group, and include, for example, acrylic acid, and methacrylic acid. In some embodiments, an anionic monomer which may be used herein may be a (meth)acrylamide monomer wherein the amide group has been hydrolyzed to a carboxyl group. Said monomer may be a derivative or salt of a monomer according to the embodiments. Additional examples of anionic monomers comprise but are not limited to those comprising sulfonic acids or a sulfonic acid group, or both. In some embodiments, the anionic monomers which may be used herein may comprise a sulfonic function that may comprise, for example, acrylamide tertiary butyl sulfonic acid (also known as 2-acrylamido-2-methylpropane sulfonic acid or N-t-butyl acrylamide sulfonic acid) ("ATBS"); vinylsulfonic acid; 4-styrenesulfonic acid; and/or any salts of any of these moieties/monomers. In some embodiments, anionic monomers may comprise organic acids. In some embodiments, anionic monomers may comprise acrylic acid, methacrylic acid, maleic acid, itaconic acid, acrylamido methylpropane sulfonic acid, vinylphosphonic acid, styrene sulfonic acid and their salts such as sodium, ammonium and potassium. Anionic monomers can be combined, for example, to form a terpolymer of acrylamide, acrylic acid and 2-acrylamido-2-methylpropane sulfonic acid. In some embodiments, an anionic monomer may comprise any one or more of the following: beta-carboxyethyl acrylate, Sodium 1-allyloxy-2-hydroxy propane sulphonate, 3-Allyloxy-2-hydroxypropane sulfonate sodium salt, vinylsulfonic acid sodium salt. acrylamide tertiary butyl sulfonic acid (also known as 2-acrylamido-2-methylpropane sulfonic acid or N-t-butyl acrylamide sulfonic acid) ("ATBS"); vinylsulfonic acid; 4-styrenesulfonic acid.

As used herein, the term "cationic monomer" generally refers to a monomer that possesses a positive charge. Examples of cationic monomers may comprise but are not limited to those comprising acryloyloxy ethyl trimethyl ammonium chloride ("AETAC"), methacryloyloxyethyltrimethylammonium chloride, methacrylamidopropyltrimethylammonium chloride ("MAPTAC"), acrylamidopropyltrimethylammonium chloride, methacryloyloxyethyldimethylammonium sulfate, dimethylaminoethyl acrylate, dimethylaminopropylmethacrylamide, Q6, Q6o 4, and/or diallyldimethylammonium chloride ("DADMAC").

Said cationic monomers may also comprise but are not limited to comprising dialkylaminoalkyl acrylates and methacrylates and their quaternary or acid salts, including, but not limited to, dimethylaminoethyl acrylate methyl chloride quaternary salt ("DMAEA.MCQ"), dimethylaminoethyl acrylate methyl sulfate quaternary salt ("DMAEM.MCQ"), dimethyaminoethyl acrylate benzyl chloride quaternary salt ("DMAEA.BCQ"), dimethylaminoethyl acrylate sulfuric acid salt, dimethylaminoethyl acrylate hydrochloric acid salt, diethylaminoethyl acrylate, methyl chloride quaternary salt, dimethylaminoethyl methacrylate methyl chloride quaternary salt, dimethylaminoethyl methacrylate methyl sulfate quaternary salt, dimethylaminoethyl methacrylate benzyl chloride quaternary salt, dimethylaminoethyl methacrylate sulfuric acid salt, dimethylaminoethyl methacrylate hydrochloric acid salt, dimethylaminoethyl methacryloyl hydrochloric acid salt, dialkylaminoalkylacrylamides or methacrylamides and their quaternary or acid salts such as acrylamidopropyltrimethylammonium chloride, dimethylaminopropyl acrylamide methyl sulfate quaternary salt, dimethylaminopropyl acrylamide sulfuric acid salt, dimethylaminopropyl acrylamide hydrochloric acid salt, methacrylamidopropyltrimethylammonium chloride, dimethylaminopropyl methacrylamide methyl sulfate quaternary salt, dimethylaminopropyl methacrylamide sulfuric acid salt, dimethylaminopropyl methacrylamide hydrochloric acid salt, diethylaminoethylacrylate, diethylaminoethylmethacrylate and diallyldialkylammonium halides such as diallyldiethylammonium chloride and diallyldimethyl ammonium chloride. Alkyl groups may generally but are not limited to those comprising C₁₋₈ alkyl groups. In some embodiments, cationic monomers may comprise quaternary ammonium or acid salts of vinyl amide, vinyl carboxylic acid, methacrylate and their derivatives. Cationic monomers may comprise but are not limited to comprising monomers selected from the group consisting of dimethylaminoethylacrylate methyl chloride quaternary salt, dimethylaminoethylmethacrylate methyl chloride quaternary salt, and diallyldimethyl ammonium chloride. Cationic monomers can be combined, for example, to form a terpolymer of dimethylaminoethylmethacrylate methyl chloride quaternary salt, and diallyldimethyl ammonium chloride and acrylamide.

The term "water-soluble polymer" generally refers to any polymer that may dissolve, disperse, or swell in water. Said polymers may modify the physical properties of aqueous systems undergoing gelation, thickening, viscosification, or emulsification/stabilization. Said polymers may perform a variety of functions, including but not limited to use as dispersing and suspending agents, stabilizers, thickeners, viscosifiers, gelants, flocculants and coagulants, film-formers, humectants, binders, and lubricants.

In the context of polymer flooding, a water-soluble polymer may include, but not be limited to including, one or acrylamide-based polymers and/or copolymers of acrylamide and further monomers, for example, vinylsulfonic acid or acrylic acid. Polyacrylamide may be partly hydrolyzed polyacrylamide ("HPAM"), in which some of the acrylamide units have been hydrolyzed to acrylic acid. In some instances, a water soluble polymer may comprise a sulfonated polyacrylamide. In some embodiments, one or more acrylamide (co)polymers may be a polymer useful for enhanced oil recovery (EOR) applications.

As used herein, the terms "polyacrylamide" or "PAM" generally refer to polymers and co-polymers comprising acrylamide moieties, and the terms encompass any polymers or copolymers comprising acrylamide moieties, *e.g*., one or more acrylamide (co)polymers. Furthermore, PAMs may comprise any of the polymers or copolymers discussed herein. In some embodiments, PAMS may comprise sulfonated PAM, such as, for example, copolymers of acrylamide and acrylamide tertiary butyl sulfonic acid (also known as 2-acrylamido-2-methylpropane sulfonic acid or N-t-butyl acrylamide sulfonic acid) ("ATBS"); vinylsulfonic acid; 4-styrenesulfonic acid; and/or any salts of any of these moieties/monomers. Additionally, the PAMs described herein, *e.g.,* one or more acrylamide (co)polymers, may be provided in one of various forms, including, for example, dry (powder) form (*e.g*., DPAM), water-in-oil emulsion (inverse emulsion), suspension, dispersion, or partly hydrolyzed (*e.g*., HPAM, in which some of the acrylamide units have been hydrolyzed to acrylic acid). In some embodiments, PAMs, *e.g*., one or more acrylamide (co)polymers, may be used for polymer flooding. In some embodiments, PAMS, *e.g.,* one or more acrylamide (co)polymers, may be used in any EOR technique.

As used herein, the terms "sulfonated polyacrylamide" or "sulfonated PAM" generally refer to polyacrylamide polymers or PAMs as above-defined which comprise one or more sulfonic acid moieties, *e.g*., one or more sulfonic acid monomers. Examples thereof include acrylamide tertiary butyl sulfonic acid (also known as 2-acrylamido-2-methylpropane sulfonic acid or N-t-butyl acrylamide sulfonic acid) ("ATBS"); vinylsulfonic acid; 4-styrenesulfonic acid; and any salts of any of these moieties/monomers.

As used herein, the term "thief zone" generally refers to zones within a reservoir into which injected water may preferentially enter over a comparably lower permeability zone, and said preferential entry may result in the injected water not reaching unswept zones. As such, a thief zone may be a pore, channel, and/or void into which water and/or other injected materials may enter in an undesirable manner. In some embodiments, one or more *in situ* gelable polymers or a composition or solution comprising may enter thief zones, subsequently form a gel and thereby block the undesired entry of water and/or other injected materials during enhanced oil recovery.

As used herein, the term "conformance control" generally refers to any process by which the sweeping of a reservoir may be spread more evenly.

As used herein, the term "conformance control agent" generally refers to any material, technique, method, and/or process that may be used to effect conformance control.

As used herein, the term "sweep efficiency" generally refers to a measure of the effectiveness of an enhanced oil recovery process that may depend on the volume of the reservoir contacted by the injected fluid.

As used herein, the term "mobility control" generally refers to a condition in oil recovery processes, *e.g*., enhanced oil recovery processes, whereby the mobility of the injectant is lower than that of the oil or preceding chemical slug, leading to a stable displacement by the injectant. In some instances, the injectant is water containing a soluble polymer that increases its viscosity, such as, for example, may occur during a polymer flood.

As used herein, the term "mobility control agent" generally refers to any material, technique, method, composition, and/or process that may be used to effect mobility control.

As used herein, the term "fracturing" generally refers to processes and methods of breaking down a geological formation and creating a fracture, i.e. the rock formation around a well bore, by pumping fluid at very high pressures (pressure above the determined closure pressure of the formation), in order to increase production rates from or injection rates into a hydrocarbon reservoir. The fracturing methods otherwise use conventional techniques known in the art.

As used herein, the term "degradation agent" generally refers to an element or compound that may be used to effect a reduction of the molecular weight of a polymer, *e.g.,* a PAM, such as, for example, by breaking bonds comprised by a polymer. As recited in claim 1, the one or more degradation agents comprise a ferrous (iron (II)) or ferric compound to degrade the one or more polymers into one or more polymers comprising reduced molecular weight fragments. In some embodiments, a degradation agent may comprise one or more compounds comprising iron II. In some embodiments, a degradation agent may comprise iron II sulfate. With the proviso that claim 1 requires the one or more degradation agents to comprise a ferrous (iron (II)) or ferric compound, a degradation agent as referred to herein may comprise any one or more of the following: iron II sulfate, persulfates, peroxides, sodium chlorite, tin (II) chloride, percarbonates, a ferrous compound, a ferrous salt, a ferric compound, a ferric salt, a ferrous salt having an organic anion, a ferrous salt having an inorganic anion, ferrous chloride, ferrous bromide, ferrous fluoride, ferrous sulfate, ammonium iron sulfate, a ferric salt having an organic anion, a ferric salt having an inorganic anion, ferric citrate, ferric chloride, ferric bromide, ferric fluoride, ferric sulfate, ammonium sulfate, ammonium persulfate, enzymes, copper compounds, ethylene glycol, glycol ethers, and combinations or mixtures thereof.

As used herein, the terms *"in situ* gelable polymer" and "polymers capable of *in situ* gelation", generally refer to polymers that may form gels and/or gel-like structures when said polymers are present within a desired location and/or a desired formation, such as, for example, once inside an oil reservoir, and/or once inside a formation that is subject to enhanced oil recovery. In some embodiments, an *in situ* gelable polymer may comprise one or more acrylamide monomers. In some embodiments, an *in situ* gelable polymer may comprise one or more anionic monomers. In some embodiments, an *in situ* gelable polymer may comprise one or more acrylamide monomers and one or more anionic monomers. In some embodiments, an *in situ* gelable polymer may comprise one or more acrylamide monomers and one or more acrylic acid monomers. In some embodiments, an *in situ* gelable polymer may comprise one or more anionic monomers, including but not limited to: acrylic acid, beta-carboxyethyl acrylate, Sodium 1-allyloxy-2-hydroxy propane sulphonate, 3-Allyloxy-2-hydroxypropane sulfonate sodium salt, vinylsulfonic acid sodium salt. acrylamide tertiary butyl sulfonic acid (also known as 2-acrylamido-2-methylpropane sulfonic acid or N-t-butyl acrylamide sulfonic acid) ("ATBS"); vinylsulfonic acid; 4-styrenesulfonic acid. In some embodiments, an *in situ* gelable polymer may comprise from about 5 mol percent to about 40 mol percent of one or more anionic monomers, e.g., one or more acrylic acid monomers. In some embodiments, an in situ gelable polymer may comprise from about 60% to about 95% of one or more acrylamide monomers. In some embodiments, an in situ gelable polymer may comprise a terpolymer, for example, a terpolymer comprising one or more acrylamide monomers, one or more acrylic acid monomers, and one or more anionic monomers, e.g., ATBS. Said one or more anionic monomers may be about 1 mol% to about 10 mol% of said terpolymer, and, in some instances, may replace acrylamide that would otherwise be present if said terpolymer was a copolymer. In some embodiments, an *in situ* gelable polymer may comprise about 70 mol% acrylamide and about 30% acrylic acid. In some embodiments, an *in situ* gelable polymer may comprise about 90 mol% acrylamide and about 10% acrylic acid. In some embodiments, an *in situ* gelable polymer may comprise one or more dialdehyde groups. Said dialdehyde groups may include, for example, any one or more of the following: glyoxal, malondialdehyde, succindialdehyde, glutaraldehyde, adipaldehyde, o-phthaldehyde, m-phthaldehyde, p-phthaldehyde, any suitable dialdehyde compound, and mixtures thereof. In some embodiments, an *in situ* gelable polymer may comprise one or more glyoxal groups, wherein the glyoxal groups may be introduced through any known glyoxalation reaction or and/or may comprise any known glyoxal sequence. In some embodiments, an *in situ* gelable polymer may comprise about 70 mol% acrylamide and about 30% acrylic acid and further comprise dialdehyde groups, optionally wherein said dialdehyde groups are post-added. In some embodiments, an *in situ* gelable polymer may be glyoxalated. In some embodiments, a degraded *in situ* gelable polymer may be prepared by (i) providing one or more polyacrylamide-based polymers, wherein said polymers optionally comprises one or more acrylamide monomers and one or more acrylic acid monomers; (ii) contacting an aqueous solution or aqueous composition, such as a brine, with said one or more polymers; (iii) contacting said aqueous solution or composition with one or more degradation agents, which degrade said one or more polymers into one or more polymers comprising reduced molecular weight fragments; (iv) contacting said aqueous solution or composition with one or more crosslinkers comprising a dialdehyde; (v) optionally adjusting the pH of said solution or composition to a desired value by adding one or more buffers, such as an alkaline buffer. In some embodiments, a degraded *in situ* gelable polymer may be prepared by (i) providing one or more polyacrylamide-based polymers, wherein said polymers optionally comprises one or more acrylamide monomers and one or more acrylic acid monomers; (ii) contacting an aqueous solution or aqueous composition, such as a brine, with said one or more polymers; (iii) contacting said aqueous solution or composition with one or more degradation agents, which degrade said one or more polymers into one or more polymers comprising reduced molecular weight fragments; (iv) contacting said aqueous solution or composition with glyoxal and/or a glyoxalating agent; (v) optionally adjusting the pH of said solution or composition to a desired value by adding one or more buffers, such as an alkaline buffer. In some embodiments, the polyacrylamide-based polymer of step (i) may be a DPAM and/or an HPAM. In some embodiments, step (iv) occurs before, during, and/or after step (iii). In some embodiments, step (iii) occurs before step (iv), and optionally wherein a an incubation period occurs after step (iii) and before step (iv), e.g., an hour or less or an hour or more incubation period. In some embodiments, step (iv) occurs before step (iii). In some embodiments, step (iv) occurs during step (iii). In some embodiments, step (iv) occurs after step (iii). In some embodiments, step (v) occurs after steps (i)-(iv). In some embodiments, step (iv) occurs before and during step (iii). In some embodiments, step (iv) occurs during and after step (iii). In some embodiments step (iv) occurs before, during, and after step (iii). In some embodiments, step (iv) comprises adding 5 wt% or less, 10 wt% or less, 15 wt% or less, 20 wt% or less, 25 wt% or less, 30 wt% or less, 35 wt% or less, 40 wt% or less, 45 wt% or less, 50 wt% or less, 55 wt% or less, 60 wt% or less, 65 wt% or less, 70 wt% or less, 75 wt% or less, 80 wt% or less, or 80 wt% or more of said one or more crosslinkers to said aqueous solution or aqueous composition. In some embodiments, step (iv) comprises adding 5 wt% or less, 10 wt% or less, 15 wt% or less, 20 wt% or less, 25 wt% or less, 30 wt% or less, 35 wt% or less, 40 wt% or less, 45 wt% or less, 50 wt% or less, 55 wt% or less, 60 wt% or less, 65 wt% or less, 70 wt% or less, 75 wt% or less, 80 wt% or less, or 80 wt% or more of one or more glyoxal groups to said aqueous solution or aqueous composition. In some instances, the wt% may be a dry weight percentage. In some embodiments, the polyacrylamide-based polymer of step (i) may be a DPAM and/or an HPAM. In some embodiments, at least one of said one or more polyacrylamide-based polymers of step (i) has a molecular weight of about 10 million Da or less, about 11 million Da or less, about 12 million Da or less, about 13 million Da or less, about 14 million Da or less, about 15 million Da or less, or about 15 million Da or more. In some embodiments, step (iii) results in at least one of said one or more polymers having a molecular weight of about 1 million Da or less, about 2 million Da or less, about 3 million Da or less, about 4 million Da or less, about 5 million Da or less, about 6 million Da or less, or about 6 million Da or more. In some embodiments, steps(i)-(v) occur onsite, i.e., at a location where said one or more degraded, *in situ* gelable polymers are intended for use. In some embodiments, the amount of degradation agent added may be an amount that results in a polymer having a molecular weight between about 1 million and about 4 million Da. In some embodiments, the amount of degradation agent added may about 50 ppm or less, about 75 ppm or less, about 80 ppm or less, about 100 ppm or less, about 125 ppm or less, about 150 ppm or less, about 175 ppm or less, about 200 ppm or less, about 250 ppm or less, about 300 ppm or less, about 350 ppm or less, about 400 ppm or less, about 450 ppm or less, about 500 ppm or less, or about 500 ppm or more. In some embodiments, the aqueous solution or composition may be sparged, e.g., sparged with nitrogen. In some embodiments, the aqueous solution or composition may be substantially free of oxygen. In some embodiments, the aqueous solution or composition may comprise one or more oxygen scavengers, e.g., one or more compounds comprising sulfite and/or bisulfite. In some embodiments, the viscosity of an aqueous solution or aqueous composition which comprises one or more degraded *in situ* gelable polymer may have a viscosity similar to that of water prior to introduction of said solution or composition into a desired location, *e.g.,* a structure and/or formation, e.g., being introduced to a formation downhole, and, after said introduction, the aqueous solution or composition comprising said one or more degraded *in situ* gelable polymers begins to increase in viscosity. In some embodiments, after a solution or composition comprising one or more degraded *in situ* gelable polymers is introduced into a desired location, *e.g.,* a formation and/or structure and/or reservoir, such as by pumping said solution or composition downhole, the one or more degraded *in situ* gelable polymers may form a gel. In some embodiments, the gel formation may be a result of the conditions downhole, such as, for example, an increased temperature downhole as compared to the temperature on the surface at which said solution or composition comprising said one or more polymers was prepared for injection. In some embodiments, said gel formation may occur after a desired amount of time. In some embodiments, said gel formation may occur after 5 days or less, 5 days or more, 6 days or more, 7 days or more, 8 days or more, 9 days or more, 10 days or more, 11 days or more, 12 days or more, 13 days or more, 14 days or more, or 15 days or more. In some embodiments, the temperature on the surface, i.e., wherein said degraded *in situ* gelable polymers are prepared, optionally by the steps recited above, is about 25°C. In some embodiments, the temperature of the reservoir and/or structure and/or formation into which one or more degraded *in situ* gelable polymers may be introduced may be about 30°C or less, 30°C or more, 40°C or more, 50°C or more, 60°C or more, 70°C or more, 80°C or more, 90°C or more, 100°C or more, 110°C or more, or about 120°C or more. In some embodiments, an increase in temperature, such as relative to the temperature above ground, may effect gelation of said one or more degraded *in situ* gelable polymers. In some embodiments, an aqueous solution or composition comprising one or more degraded *in situ* gelable polymers may not form a gel prior to introduction into a desired location, i.e., said solution or composition may not form a gel when at normal/standard above-ground conditions. In some embodiments, some gelation of the degraded *in situ* gelable polymer containing solution or composition may occur prior to its introduction into a desired location where *in situ* gelation is desired. In some embodiments, a solution or composition comprising one or more degraded *in situ* gelable polymers may be about an 0.5% active solution or composition. In some embodiments, the pH of a solution or composition comprising one or more degraded *in situ* gelable polymers may influence the solution-gelation transition. In some embodiments, the pH of a solution or composition comprising one or more degraded *in situ* gelable polymers may be from about 6.5 to about 8.5, e.g., in some instances the solution or composition comprising the one or more degraded *in situ* gelable polymers may comprise a pH of about 7.8 or may comprise a pH of about 8.2. In some embodiments, the more alkaline and/or basic the pH of a solution or composition comprising degraded one or more *in situ* gelable polymers, the shorter the duration of time for an increase in viscosity and/or gel formation to occur in said solution and/or composition. In some embodiments, the more alkaline and/or basic the pH of a solution or composition comprising degraded one or more *in situ* gelable polymers, the longer the duration of time for an increase in viscosity and/or gel formation to occur in said solution and/or composition. In some embodiments, one or more degraded *in situ* gelable polymers may form a gel once in a desired location, such as for example, once in a desired structure and/or formation and/or location downhole, and, once said gel is formed, said gel may be stable for 1 month or less, 1 month or more, 2 months or more, 3 months or more, 4 months or more, 5 months or more, or 6 months or more. In some embodiments, one or more degraded *in situ* gelable polymers may form a gel once in a desired location, such as for example, once in a desired structure and/or formation and/or location downhole, and, once said gel is formed, said gel may be stable for the lifetime of the structure and/formation and/or location. In some embodiments, one or more degraded *in situ* gelable polymers may be used as conformation control agents. In some embodiments, one or more degraded *in situ* gelable polymers may be used as mobility control agents. In some embodiments, an aqueous composition or aqueous solution comprising one or more degraded *in situ* gelable polymers may be able to enter formations of 9.87 x 10⁻¹² m² (10 darcies) or more, 9.87 x 10⁻¹² m² (10 darcies) or less, 4.93 x 10⁻¹² m² (5 darcies) or less, 9.87 x 10⁻¹³ m² (1 darcy) or less, or about 4.93 x 10⁻¹³ m² (0.5 darcies) or less. In some embodiments, one or more degraded *in situ* gelable polymers may be glyoxalated, and the glyoxal groups may participate in crosslinks that may thereby promote gel formation once said one or more *in situ* gelable polymers are present in a desired location. In some embodiments, any one of the molecular weight of one or more *in situ* gelable polymers or degraded *in situ* gelable polymers, the polymeric formulation of said one or more *in situ* gelable or degraded *in situ* gelable polymers, the crosslinker dosage, *e.g.,* dialdehyde dosage, and/or the solution alkalinity levels, may influence the solution gelation transition of one or more degraded *in situ* gelable polymers. In some embodiments, after gelation the resultant gelation viscosity or gel strength of a gel formed by a degraded *in situ* gelable polymer may approximate that of a non-degraded glyoxalated polyacrylamide ("GPAM") gel.

As used herein, the terms "desired location" and "target location" generally refer to any formation and/or structure into which the introduction of one or more degraded *in situ* gelable polymers may increase oil recovery from said formation or structure. In some embodiments, a desired location may be a location downhole. In some embodiments, a desired location may be an oil reservoir, and/or any structure or formation within said oil reservoir. In some embodiments, a desired location may be a location in which enhanced oil recovery is to be performed. In some embodiments, a desired location may be a natural fracture or a vug. In some embodiments, a desired location may be a high permeability zone. In some embodiments, a desired location may be a low permeability zone. In some embodiments, a desired location may be a formation of 9.87 x 10⁻¹² m² (10 darcies) or more, 9.87 x 10⁻¹² m² (10 darcies) or less, 4.93 x 10⁻¹² m² (5 darcies) or less, 9.87 x 10⁻¹³ m² (1 darcy) or less, or about 4.93 x 10⁻¹³ m² (0.5 darcies) or less. In some embodiments, a desired location may be substantially free from oxygen. In some embodiments, a desired location may be an anaerobic environment.

### METHODS AND COMPOSTIONS

The present invention relates to a method according to claim 1 of effecting *in situ* gelation of one or more degraded *in situ* gelable polymers at a desired location. The method may be used during a method of enhanced oil recovery (e.g., according to claim 3). Also described herein but not recited in the claims are compositions that are useful in the methods of the invention. Accordingly, disclosed herein are methods and compositions for enhanced oil recovery, such as chemical enhanced oil recovery and/or enhanced oil recovery which comprises polymer flooding and/or enhanced oil recovery which comprises conformance control and/or mobility control, wherein said methods comprise use of one or more degraded *in situ* gelable polymers and compositions comprise one or more degraded *in situ* gelable polymers. Moreover, the present disclosure generally relates to a method of enhanced oil recovery which method comprises introducing one or more degraded *in situ* gelable polymers into a desired location, *e.g.,* a desired formation downhole, which one or more degraded *in situ* gelable polymers when introduced into said desired location when present for a desired duration form a gel in said desired location. In some embodiments, at least one of said one or more degraded *in situ* gelable polymers may comprise one or more acrylamide monomers. In some embodiments, at least one of said one or more degraded *in situ* gelable polymers may comprise one or more anionic monomers. In some embodiments, at least one of said one or more degraded *in situ* gelable polymers may comprise one or more acrylamide monomers and one or more anionic monomers. In some embodiments, at least one of said one or more degraded *in situ* gelable polymers may comprise one or more acrylamide monomers and one or more acrylic acid monomers. In some embodiments, at least one of said one or more degraded *in situ* gelable polymers may comprise one or more anionic monomers, including but not limited to: acrylic acid, beta-carboxyethyl acrylate, sodium 1-allyloxy-2-hydroxy propane sulphonate, 3-Allyloxy-2-hydroxypropane sulfonate sodium salt, vinylsulfonic acid sodium salt. acrylamide tertiary butyl sulfonic acid (also known as 2-acrylamido-2-methylpropane sulfonic acid or N-t-butyl acrylamide sulfonic acid) ("ATBS"); vinylsulfonic acid; 4-styrenesulfonic acid. In some embodiments, at least one of said one or more degraded *in situ* gelable polymers may comprise from about 5 mol percent to about 40 mol percent of one or more anionic monomers, e.g., one or more acrylic acid monomers. In some embodiments, at least one of said one or more degraded in situ gelable polymers may comprise at least one of said one or more degraded in situ gelable polymers may comprise a terpolymer, for example, a terpolymer comprising one or more acrylamide monomers, one or more acrylic acid monomers, and one or more anionic monomers, e.g., ATBS. Said one or more anionic monomers may be about 1 mol% to about 10 mol% of said terpolymer, and, in some instances, may replace acrylamide that would otherwise be present if said terpolymer was a copolymer. In some embodiments, at least one of said one or more degraded *in situ* gelable polymers may comprise about 70 mol% acrylamide and about 30% acrylic acid. In some embodiments, at least one of said one or more degraded *in situ* gelable polymers may comprise about 90 mol% acrylamide and about 10% acrylic acid. In some embodiments, at least one of said one or more degraded *in situ* gelable polymers may comprise about 70 mol% acrylamide and about 30% acrylic acid and may further comprise one or more dialdehyde groups, optionally wherein said dialdehyde groups are post-added. In some embodiments, at least one of said one or more degraded *in situ* gelable polymers may comprise glyoxal groups, wherein the glyoxal groups may be introduced through any known glyoxalation reaction.

In some embodiments, a method of enhanced oil recovery may a method of effecting *in situ* gelation of one or more degraded *in situ* gelable polymers at a desired location, comprising (i) providing one or more polyacrylamide-based polymers, wherein said polymers optionally comprise one or more acrylamide monomers and one or more acrylic acid monomers; (ii) contacting an aqueous solution or aqueous composition, such as a brine, with said one or more polymers; (iii) contacting said aqueous solution or composition with one or more degradation agents, which degrade said one or more polymers into one or more polymers comprising reduced molecular weight fragments; (iv) contacting said aqueous solution or composition with one or more crosslinkers comprising a dialdehyde; (v) optionally adjusting the pH of said solution or composition to a desired value by adding one or more buffers, such as an alkaline buffer; (vi) introducing or injecting the resultant degraded *in situ* gelable containing solution or composition into a site where *in situ* gelation of said one or more degraded *in situ* gelable polymers is to occur; and (vii) allowing for or providing conditions at the desired location which permit gelation of the one or more degraded *in situ* gelable polymers to occur over time. In some embodiments, a degraded *in situ* gelable polymer may be prepared by (i) providing one or more polyacrylamide-based polymers, wherein said polymers optionally comprises one or more acrylamide monomers and one or more acrylic acid monomers; (ii) contacting an aqueous solution or aqueous composition, such as a brine, with said one or more polymers; (iii) contacting said aqueous solution or composition with one or more degradation agents, which degrade said one or more polymers into one or more polymers comprising reduced molecular weight fragments; (iv) contacting said aqueous solution or composition with glyoxal and/or a glyoxalating agent; (v) optionally adjusting the pH of said solution or composition to a desired value by adding one or more buffers, such as an alkaline buffer; (vi) introducing or injecting the resultant degraded *in situ* gelable containing solution or composition into a site where *in situ* gelation of said one or more degraded *in situ* gelable polymers is to occur; and (vii) allowing for or providing conditions at the desired location which permit gelation of the one or more degraded *in situ* gelable polymers to occur over time. In some embodiments, the polyacrylamide-based polymer of step (i) may be a DPAM and/or an HPAM. In some embodiments, step (iv) occurs before, during, or after step (iii). In some embodiments, step (iii) occurs before step (iv), and optionally wherein an incubation period occurs after step (iii) and before step (iv), e.g., an hour or less or an hour or more incubation period. In some embodiments, step (iv) occurs before step (iii). In some embodiments, step (iv) occurs during step (iii). In some embodiments, step (iv) occurs after step (iii). In some embodiments, step (v) occurs after steps (i)-(iv). In some embodiments, step (iv) occurs before and during step (iii). In some embodiments, step (iv) occurs during and after step (iii). In some embodiments step (iv) occurs before, during, and after step (iii). In some embodiments, step (iv) comprises adding 5 wt% or less, 10 wt% or less, 15 wt% or less, 20 wt% or less, 25 wt% or less, 30 wt% or less, 35 wt% or less, 40 wt% or less, 45 wt% or less, 50 wt% or less, 55 wt% or less, 60 wt% or less, 65 wt% or less, 70 wt% or less, 75 wt% or less, 80 wt% or less, or 80 wt% or more of said one or more crosslinkers to said aqueous solution or aqueous composition. In some embodiments, step (iv) comprises adding 5 wt% or less, 10 wt% or less, 15 wt% or less, 20 wt% or less, 25 wt% or less, 30 wt% or less, 35 wt% or less, 40 wt% or less, 45 wt% or less, 50 wt% or less, 55 wt% or less, 60 wt% or less, 65 wt% or less, 70 wt% or less, 75 wt% or less, 80 wt% or less, or 80 wt% or more of one or more glyoxal groups to said aqueous solution or aqueous composition. In some instances, the wt% may be a dry weight percentage. In some embodiments, at least one of said one or more polyacrylamide-based polymers of step (i) has a molecular weight of about 10 million Da or less, about 11 million Da or less, about 12 million Da or less, about 13 million Da or less, about 14 million Da or less, about 15 million Da or less, or about 15 million Da or more. In some embodiments, step (iii) results in at least one of said one or more polymers having a molecular weight of about 1 million Da or less, about 2 million Da or less, about 3 million Da or less, about 4 million Da or less, about 5 million Da or less, about 6 million Da or less, or about 6 million Da or more. In some embodiments, steps(i)-(v) occur onsite, i.e., at a location where said one or more degraded, *in situ* gelable polymers are intended for use. In some embodiments, the amount of degradation agent added may be any amount that results in one or more polymers of desired molecular weight. In some embodiments, the amount of degradation agent added may be any amount that results in a polymer having a molecular weight between about 1 million and about 4 million Da. In some embodiments, the amount of degradation agent added may about 50 ppm or less, about 75 ppm or less, about 80 ppm or less, about 100 ppm or less, about 125 ppm or less, about 150 ppm or less, about 175 ppm or less, about 200 ppm or less, about 250 ppm or less, about 300 ppm or less, about 350 ppm or less, about 400 ppm or less, about 450 ppm or less, about 500 ppm or less, or about 500 ppm or more. In some embodiments, step (v) may comprise adjusting the pH of the solution or composition to a value of about 6.5 to about 8.5.

In some embodiments, a method of enhanced oil recovery may comprise introducing one or more degraded *in situ* gelable polymers into a desired formation and/or structure, wherein said one or more degraded *in situ* gelable polymers may be comprised in an aqueous solution or composition. In some embodiments, a solution or composition comprising one or more degraded *in situ* gelable polymers may be about an 0.5% active solution or composition. In some embodiments, the viscosity of an aqueous solution or aqueous composition which comprises one or more degraded *in situ* gelable polymer may have a viscosity similar to that of water prior to introduction of said solution or composition into a desired location, such as being introduced to a formation downhole. In some embodiments, the viscosity of an aqueous solution or aqueous composition which comprises one or more degraded *in situ* gelable polymer may be about 5 mPa·s (5 cPs) or less, about 6 mPa·s (6 cPs) or less, about 7 mPa·s (7 cPs) or less, about 8 mPa·s (8 cPs) or less, about 9 mPa·s (9 cPs) or less, about 10 mPa·s (10 cPs) or less about 12.5 mPa·s (12.5 cPs) or less, about 15 mPa·s (15 cPs) or less, about 20 mPa·s (20 cPs) or less, about 25 mPa·s (25 cPs) or less, about 30 mPa·s (30 cPs) or less, about 35 mPa·s (35 cPs) or less, about 40 mPa·s (40 cPs) or less, about 45 mPa·s (45 cPs) or less, about 50 mPa·s (50 cPs) or less, about 55 mPa·s (55 cPs) or less, about 60 mPa·s (60 cPs) or less, about 65 mPa·s (65 cPs) or less, about 70 mPa·s (70 cPs) or less, about 75 mPa·s (75 cPs) or less, about 80 mPa·s (80 cPs) or less, about 85 mPa·s (85 cPs) or less, about 90 mPa·s (90 cPs) or less, about 95 mPa·s (95 cPs) or less, about 100 mPa·s (100 cPs) or less, or about 100 mPa·s (100 cPs) or more prior to introduction of said solution or composition into a desired location. In some embodiments, the viscosity of an aqueous solution or aqueous composition which comprises one or more degraded *in situ* gelable polymer may be about 10² mPa·s (10² cPs) or less, about 10² mPa·s (10² cPs) or more, about 10³ mPa·s (10³ cPs) or more, about 10⁴ mPa·s (10⁴ cPs) or more, or about 10⁵ mPa·s (10⁵ cPs) or more, a desired amount of time following introduction of said solution or composition into a desired location. In some embodiments, after a solution or composition comprising one or more degraded *in situ* gelable polymers is introduced into a desired location such as by pumping said solution or composition downhole, the solution or composition comprising may increase in viscosity relative to its viscosity prior to introduction. In some embodiments, after a solution or composition comprising one or more degraded *in situ* gelable polymers is introduced into a desired location, *e.g.,* a formation and/or structure and/or reservoir, such as by pumping said solution or composition downhole, the one or more degraded *in situ* gelable polymers may form a gel. In some embodiments, the increase in viscosity and/or gel formation may be a result of the conditions downhole, such as, for example, an increased temperature downhole as compared to the temperature on the surface at which said solution or composition comprising said one or more degraded *in situ* gelable polymers was prepared for injection. In some embodiments, said gel formation may occur after a desired amount of time. In some embodiments, said gel formation may occur after 5 days or less, 5 days or more, 6 days or more, 7 days or more, 8 days or more, 9 days or more, 10 days or more, 11 days or more, 12 days or more, 13 days or more, 14 days or more, 3 weeks or less, 3 weeks or more, 4 weeks or more, 5 weeks or more, 6 weeks or more, 7 weeks or more, or 8 weeks or more. In some embodiments, after gelation the resultant gelation viscosity or gel strength of a gel formed by a degraded *in situ* gelable polymer may approximate that of a non-degraded GPAM gel, e.g., a non-degraded GPAM gel wherein the GPAM polymer had a molecular weight from about 10 million to about 15 million. In some embodiments, the resultant gelation viscosity or gel strength and the non-degraded glyoxalated polyacrylamide ("GPAM") gelation viscosity or gel strength may be about 10² mPa·s (10² cPs) or less, about 10² mPa·s (10² cPs) or more, about 10³ mPa·s (10³ cPs) or more, about 10⁴ mPa·s (10⁴ cPs) or more, or about 10⁵ mPa·s (10⁵ cPs) or more. In some embodiments, the temperature on the surface, i.e., wherein said degraded *in situ* gelable polymers are prepared is about 25°C. In some embodiments, the temperature of the desired location, e.g., reservoir and/or structure and/or formation into which one or more degraded *in situ* gelable polymers may be introduced, may be about 30°C or less, 30°C or more, 40°C or more, 50°C or more, 60°C or more, 70°C or more, 80°C or more, 90°C or more, 100°C or more, 110°C or more, or about 120°C or more. In some embodiments, an increase in temperature may promote gelation of said one or more degraded *in situ* gelable polymers. In some embodiments, one or more degraded *in situ* gelable polymers may form a gel once in a desired location, such as for example, once in a desired structure and/or formation and/or location downhole, and, once said gel is formed, said gel may be stable for 1 month or less, 1 month or more, 2 months or more, 3 months or more, 4 months or more, 5 months or more, or 6 months or more, e.g., about 1-2 months. In some embodiments, one or more degraded *in situ* gelable polymers may form a gel once in a desired location, such as for example, once in a desired structure and/or formation and/or location downhole, and, once said gel is formed, said gel may be stable for the lifetime of the structure and/formation and/or location. In some embodiments, one or more *in situ* gelable polymers may comprise one or more dialdehyde groups, and the dialdehyde groups may participate in crosslinks that may thereby promote gel formation once said one or more degraded *in situ* gelable polymers are present in a desired location. In some embodiments, one or more degraded *in situ* gelable polymers may be glyoxalated, and the glyoxal groups may participate in crosslinks that may thereby promote gel formation once said one or more degraded *in situ* gelable polymers are present in a desired location. In some embodiments, some gelation of the degraded *in situ* gelable polymer containing solution or composition may occur prior to its introduction into a desired location where *in situ* gelation is desired.

In some embodiments, the pH of a solution or composition comprising one or more degraded *in situ* gelable polymers may influence the solution-gelation transition of said solution or composition and/or effect the increase in viscosity and/or the rate of gel formation of the one or more degraded *in situ* gelable polymers. In some embodiments, the pH of a solution or composition comprising one or more degraded *in situ* gelable polymers may be from about 6.5 to about 8.5, e.g., in some instances the solution or composition comprising the one or more degraded *in situ* gelable polymers may comprise a pH of about 7.8 or may comprise a pH of about 8.2. In some embodiments, the more alkaline and/or basic the pH of a solution or composition comprising the degraded one or more *in situ* gelable polymers, the shorter the duration of time required for an increase in viscosity and/or gel formation to occur in said solution and/or composition. In some embodiments, the more alkaline and/or basic the pH of a solution or composition comprising one or more degraded *in situ* gelable polymers, the longer the duration of time for an increase in viscosity and/or gel formation to occur in said solution and/or composition. In some embodiments, any one of the molecular weight of one or more *in situ* gelable polymers or degraded *in situ* gelable polymers, the polymeric formulation of said one or more polymers, the crosslinker dosage, e.g., glyoxal dosage, and/or the solution alkalinity levels may effect the solution gelation transition of one or more degraded *in situ* gelable polymers.

In some embodiments, a method of enhanced oil recovery may comprise the use of one or more degraded *in situ* gelable polymers as conformation control agents. In some embodiments, one or more degraded *in situ* gelable polymers may be used as mobility control agents. In some embodiments, an aqueous composition or aqueous solution comprising one or more degraded *in situ* gelable polymers may be able to enter formations of 9.87 x 10⁻¹² m² (10 darcies) or more, 9.87 x 10⁻¹² m² (10 darcies) or less, 4.93 x 10⁻¹² m² (5 darcies) or less, 9.87 x 10⁻¹³ m² (1 darcy) or less, or about 4.93 x 10⁻¹³ m² 0.5 darcies or less.

In some embodiments, a method of enhanced oil recovery may comprise introduction of one or more degraded *in situ* gelable polymers into a desired location as a part of a polymer flood. In some embodiments, a method of enhanced oil recovery may comprise a. introduction of one or more degraded *in situ* gelable polymers into a desired location, b. gelation of said one or more degraded *in situ* gelable polymers, thereby forming a gel in said desired location, and c. performing one or more polymer floods and/or one or more waterfloods. In some embodiments, a method of enhanced oil recovery may comprise a. performing one or more polymer floods and/or water floods; b. introducing one or more degraded *in situ* gelable polymers into a desired location, optionally as a part of a polymer flood, c. gelation of said one or more degraded *in situ* gelable polymers, thereby forming a gel in said desired location, and d. after gel formation, performing one or more polymer floods and/or one or more waterfloods. In such instances, the gels formed by said one or more degraded *in situ* gelable polymers may enhance oil recovery by directing the polymer flood and/or the waterflood to unswept locations and/or formations and/or structures, which may thereby increase sweep efficiency. In some embodiments, one or more degraded *in situ* gelable polymers may form a gel when being used as a conformation control agent. In some embodiments, one or more degraded *in situ* gelable polymers may be introduced into a desired location by use of a pump configured to pump the one or more polymers, and/or a solution or composition comprising, through fluid conduits which are disposed in an injection wellbore and downhole.

In some embodiments, a method of enhanced oil recovery may comprise use of one or more degraded *in situ* gelable polymers, wherein said one or more polymers are used for post waterflood mobility control, i.e., as mobility control agents. In some embodiments, a method of enhanced oil recovery may comprise use of one or more degraded *in situ* gelable polymers, and/or a solution and/or composition comprising, to aid in oil recovery from low permeable (less than 9.87 x 10⁻¹⁵ m² (10 mD)) reservoirs, such as sandstone reservoirs, and/or heterogenous reservoirs, such as reservoirs that may mostly be carbonate. In some embodiments, in such a method, use of said one or more degraded *in situ* gelable polymers may increase sweep efficiency and/or increase oil recovery as compared to a method of enhanced oil recovery that does not comprise use of said one or more degraded *in situ* gelable polymers. In some embodiments, a method of enhanced oil recovery comprises introduction of one or more degraded *in situ* gelable polymers, such as introduction of an aqueous solution and/or aqueous composition comprising said one or more polymers, into a desired location, wherein said desired location is a natural fracture or a vug, and, once in said desired location, the one or more degraded *in situ* gelable polymers form a gel. Such gel formation my increase profile control efficiency as compared to a method that did not comprise use of said one or more degraded *in situ* gelable polymers. In some embodiments, a method of enhanced oil recovery may comprise a. introduction of one or more degraded *in situ* gelable polymers into a desired location; b. formation of a gel comprising said one or more degraded *in situ* gelable polymers, and c. after gel formation, effecting one or more polymer floods and/or waterfloods, wherein the oil recovery effected by said one or more polymer floods and/or one or more waterfloods is increased as a result of the gels formed by said one or more degraded *in situ* gelable polymers as compared to a method which did not comprise use of said one or more degraded *in situ* gelable polymers. In some embodiments, a method of enhanced oil recovery may comprise a. performing one or more polymer floods and/or water floods; b. introducing one or more degraded *in situ* gelable polymers into a desired location; c. gelation of said one or more degraded *in situ* gelable polymers, and c. after gel formation, effecting one or more polymer floods and/or waterfloods, wherein the oil recovery effected by said one or more polymer floods and/or one or more waterfloods is increased as a result of the gels formed by said one or more polymers as compared to a method which did not comprise use of said one or more degraded *in situ* gelable polymers.

In some embodiments, one or more degraded *in situ* gelable polymers may be used in an enhanced oil recovery technique that may primarily targets bypassed oil. In some embodiments, said one or more degraded *in situ* gelable polymers may be added to injection water for waterflooding and/or polymer flooding. In some embodiments, said one or more degraded *in situ* gelable polymers may serve as water-shutoff, conformance control, and/or mobility control agents. In some embodiments, said one or more degraded *in situ* gelable polymers may divert injected fluid away from thief zones and into adjacent matrix rock or low-permeability zones, thereby increasing macroscopic sweep efficiency and improving hydrocarbon recovery. In some embodiments, use of one or more degraded *in situ* gelable polymers in EOR methods may result in a decrease in water production in water and gas shutoff, fluid loss control, zone abandonment, water and gas coning, squeeze and recompletion, chemical liner completions and lost circulation during drilling operations and plugging during drilling and drilling completion.

In some embodiments, compositions and methods comprising one or more degraded *in situ* gelable polymers may be used in conjunction with enhanced oil recovery techniques and processes. Said one or more degraded *in situ* gelable polymers may improve the overall macroscopic sweep efficiency, may improve and/or increase hydrocarbon production, and may decrease associated water production. Said one or more degraded *in situ* gelable polymers may generally be used for in processes and techniques related to conformance control as a conformance control agent. Also, said degraded *in situ* gelable one or more polymers may generally comprise permeability reduction capabilities and may enable the strategic plugging of high-permeability channels. Said plugging may divert flooding fluid to relatively unswept adjacent low-permeability zones.

In some embodiments, one or more degraded *in situ* gelable polymers may be used as a part of any method and/or process related to enhanced oil recovery and/or conformance control and/or mobility control. In some embodiments, said one or more degraded *in situ* gelable polymers may be used as a part of methods and/or processes involving conformance control, water shutoff, drill fluids, and/or permeability control. In some embodiments, said one or more degraded *in situ* gelable polymers may be used in methods for improving production from an oil, wherein said methods may comprise: (i) providing a formulation comprising one or more degraded *in situ* gelable polymers, and delivering the formulation into the oil well, whereby the formulation improves production from the well. In some embodiments, said one or more degraded *in situ* gelable polymers may be used in methods for water blocking or water shutoff in an oil well, wherein said methods comprise (i) providing a formulation comprising one or more degraded *in situ* gelable polymers or a composition as described herein, and (ii) delivering the formulation into the oil well, whereby the formulation provides water blocking or water shutoff in the well.

Further, in some embodiments, one or more degraded *in situ* gelable polymers may be used in a method of enhancing oil recovery from an oil source, comprising (i) providing a formulation comprising one or more degraded *in situ* gelable polymers or a composition containing as discussed herein, and (ii) delivering the formulation into the oil source, whereby the formulation enhances oil recovery from the oil source. Additionally, in some embodiments, said one or more degraded *in situ* gelable polymers may be used in a method of treating a petroleum-containing formation to reduce sand production, comprising: (i) providing a formulation comprising one or more degraded *in situ* gelable polymers or a composition containing as discussed herein, and (ii) delivering said one or more degraded *in situ* gelable polymers or composition containing into the petroleum-containing formation, whereby the formulation reduces sand production in the formation. Furthermore, in some embodiments, said one or more degraded *in situ* gelable polymers may be used in a method of displacing fluid from a wellbore by viscous plug flow, comprising: (i) providing one or more degraded *in situ* gelable polymers or a composition containing as discussed herein, and (ii) delivering the one or more degraded *in situ* gelable polymers into a wellbore, whereby the formulation forms a viscous plug in the wellbore, thereby displacing fluid therefrom.

In some embodiments, a method of enhanced oil recovery may comprise: (i) obtaining or providing a composition comprising one or more degraded *in situ* gelable polymers; (ii) placing the composition in a subterranean formation downhole; and (iii) extracting material comprising petroleum from the subterranean formation downhole via a production wellbore. In some embodiments, gelation of the one or more degraded *in situ* gelable polymers may occur in a subterranean formation. In some embodiments, during said method, the composition comprising one or more degraded *in situ* gelable polymers is placed downhole via an injection wellbore. In some embodiments of a method comprising use of one or more degraded *in situ* gelable polymers, extraction may be effected using a production wellbore. In some embodiments of a method comprising use of the one or more degraded *in situ* gelable polymers discussed herein, a composition comprising said one or more polymers may be placed in the subterranean formation downhole comprises placing the composition in a producing zone downhole, and wherein the extracting of the material comprising petroleum from the subterranean formation downhole comprises extracting of the material from the producing zone.

Additionally, in some embodiments, a method for remediation of a zone within a subterranean formation bearing heavy/viscous oil to inhibit breakthrough of water from a water injection well via the zone into a production well, the zone comprised of a void space, a halo region, or both, within the zone due to production of the heavy/viscous oil through the production well, the zone thereby allowing for pressure communication between the injection well and the production well, may comprise: (i) injecting a composition into the zone via the injection well, the composition comprising one or more degraded *in situ* gelable polymers or a composition as described herein; (ii) allowing the one or more degraded *in situ* gelable polymers to set for a time sufficient to thereby form a plug which reduces flow communication of water between the injection well and the production well. In some embodiments of said method, the displacement fluid is selected from water, alcohols, fuel oil or crude oil. In some embodiments of said method, the displacement fluid is water.

Due to the characteristics of the one or more degraded *in situ* gelable polymers, such as the low, in some instances near water-like, viscosity of a solution or composition comprising said one or more polymers at the time of injection, these polymers and compositions containing can propagate far into a reservoir. In some embodiments, one or more degraded *in situ* gelable polymers and/or a composition comprising may be added to injection water as part of a secondary or tertiary water recovery process, carbon dioxide injection, chemical, or air injection for recovery of hydrocarbon from subterranean sandstone or carbonate formation. This may allow for control of the near well-bore and in-depth formation conformance vertically and laterally by selectively blocking the high water channels.

In some embodiments, methods for enhanced oil recovery which comprise the use of one or more degraded *in situ* gelable polymers may provide for any one or more of the following non-limiting examples of advantages as compared to methods which did not comprise use of said one or more degraded *in situ* gelable polymers: 1. the desired polymer molecular weight that results in a desired viscosity of a solution comprising one or more degraded *in situ* gelable polymers may be achieved through use of one or more degradation agents and one or more DPAMs; 2. use of said one or more degraded *in situ* gelable polymers in a solution or composition for enhanced oil recovery provides a solution or composition with a reduced bulk viscosity as compared to conventional polymers that may be used in instances where *in situ* gelable polymers may be used, such as, for example, as a conformance control agent, a mobility control agent, as a part of a polymer flood, etc.; 3. use of said one or more degraded *in situ* gelable polymers provides for a time-controllable *in situ* gelable system 4. on-site preparation of the one or more degraded *in situ* gelable polymers, such as on-site glyoxalation, on site degradation, etc.; 5. the one or more degraded *in situ* gelable polymers can be implemented in batch process mode at a user site with standard equipment, i.e., without the need for specialized equipment; 6. as the one or more degraded *in situ* gelable polymers can be prepared on-site using DPAM, the use of such DPAMs allows for improved logistics of both cost and product robustness for various different climate conditions; 7. improved injectivity, especially for low permeability reservoirs, for methods comprising use of said one or more degraded *in situ* gelable polymers as compared to methods comprising the use of standard compositions, e.g., standard HPAM comprising compositions, and/or methods not comprising use of said one or more degraded *in situ* gelable polymers; and 8. gels that are formed by the one or more degraded *in situ* gelable polymers at the desired location and at the desired time may be stable for at least one month under aerobic reservoir conditions, and may generally be stable for many months, or, depending on the reservoir conditions, indefinitely.

Moreover, the present disclosure generally relates to a composition suitable for use in EOR, such as, for example, as a conformance control agent, as a mobility control agent, for post water flood mobility control, to increase sweep efficiency, etc., wherein said composition comprises one or more degraded *in situ* gelable polymers and an aqueous fluid. Such a composition may be used, for example, in any of the methods discussed herein. In some examples, said composition may be suitable for use in polymer flooding. In some examples, said composition may be suitable for use as a conformance control agent. In some examples, said composition may be suitable for use as a mobility control agent.

In some examples, at least one of said one or more degraded *in situ* gelable polymers may comprise one or more acrylamide monomers. In some examples, at least one of said one or more degraded *in situ* gelable polymers may comprise one or more anionic monomers. Said one or more anionic monomers may comprise, but are not limited to comprising, any one or more of the following: acrylic acid, beta-carboxyethyl acrylate, sodium 1-allyloxy-2-hydroxy propane sulphonate, 3-Allyloxy-2-hydroxypropane sulfonate sodium salt, vinylsulfonic acid sodium salt. acrylamide tertiary butyl sulfonic acid (also known as 2-acrylamido-2-methylpropane sulfonic acid or N-t-butyl acrylamide sulfonic acid) ("ATBS"); vinylsulfonic acid; 4-styrenesulfonic acid. In some examples, at least one of said one or more degraded *in situ* gelable polymers may comprise one or more acrylamide monomers and one or more anionic monomers. In some examples, at least one of said one or more degraded *in situ* gelable polymers may comprise one or more acrylamide monomers and one or more acrylic acid monomers. In some examples, at least one of said one or more degraded *in situ* gelable polymers may comprise one or more anionic monomers, including but not limited to: acrylic acid, beta-carboxyethyl acrylate, sodium 1-allyloxy-2-hydroxy propane sulphonate, 3-Allyloxy-2-hydroxypropane sulfonate sodium salt, vinylsulfonic acid sodium salt. acrylamide tertiary butyl sulfonic acid (also known as 2-acrylamido-2-methylpropane sulfonic acid or N-t-butyl acrylamide sulfonic acid) ("ATBS"); vinylsulfonic acid; 4-styrenesulfonic acid. In some examples, at least one of said one or more degraded *in situ* gelable polymers may comprise from about 5 mol percent to about 40 mol percent of one or more anionic monomers, e.g., one or more acrylic acid monomers. In some examples, at least one of said one or more degraded in situ gelable polymers may comprise at least one of said one or more degraded in situ gelable polymers may comprise a terpolymer, for example, a terpolymer comprising one or more acrylamide monomers, one or more acrylic acid monomers, and one or more anionic monomers, e.g., ATBS. Said one or more anionic monomers may be about 1 mol% to about 10 mol% of said terpolymer, and, in some instances, may replace acrylamide that would otherwise be present if said terpolymer was a copolymer. In some examples, at least one of said one or more degraded *in situ* gelable polymers may comprise about 70 mol% acrylamide and about 30% acrylic acid. In some examples, at least one of said one or more degraded *in situ* gelable polymers may comprise about 90 mol% acrylamide and about 10% acrylic acid. In some examples, at least one of said one or more degraded *in situ* gelable polymers may comprise about 70 mol% acrylamide and about 30% acrylic acid, and may further comprise one or more dialdehyde groups, optionally wherein said dialdehyde groups are post-added. Examples of dialdehyde groups include but are not limited to including glyoxal, malondialdehyde, succindialdehyde, glutaraldehyde, adipaldehyde, o-phthaldehyde, m-phthaldehyde, p-phthaldehyde, any suitable dialdehyde compound, and mixtures thereof. In some examples, at least one of said one or more degraded *in situ* gelable polymers may comprise glyoxal groups, wherein the glyoxal groups may be introduced through any known glyoxalation reaction.

In some examples, a composition comprising one or more degraded *in situ* gelable polymers may be prepared by (i) providing one or more polyacrylamide-based polymers, wherein said polymers optionally comprises one or more acrylamide monomers and one or more acrylic acid monomers; (ii) contacting an aqueous solution or aqueous composition, such as a brine, with said one or more polymers; (iii) contacting said aqueous solution or composition with one or more degradation agents, which degrade said one or more polymers into one or more polymers comprising reduced molecular weight fragments; (iv) contacting said aqueous solution or composition with one or more crosslinkers comprising a dialdehyde; (v) optionally adjusting the pH of said solution or composition to a desired value by adding one or more buffers, such as an alkaline buffer. In some examples, a composition comprising one or more degraded *in situ* gelable polymers may be prepared by (i) providing one or more polyacrylamide-based polymers, wherein said polymers optionally comprises one or more acrylamide monomers and one or more acrylic acid monomers; (ii) contacting an aqueous solution or aqueous composition, such as a brine, with said one or more polymers; (iii) contacting said aqueous solution or composition with one or more degradation agents, which degrade said one or more polymers into one or more polymers comprising reduced molecular weight fragments; (iv) contacting said aqueous solution or composition with glyoxal and/or a glyoxalating agent; (v) optionally adjusting the pH of said solution or composition to a desired value by adding one or more buffers, such as an alkaline buffer. In some examples, the polyacrylamide-based polymer of step (i) may be a DPAM and/or an HPAM. In some examples, step (iv) occurs before, during, or after step (iii). In some examples, step (iii) occurs before step (iv), and optionally wherein an incubation period occurs after step (iii) and before step (iv). In some examples, step (iv) occurs before step (iii). In some examples, step (iv) occurs during step (iii). In some examples, step (iv) occurs after step (iii). In some examples, step (v) occurs after steps (i)-(iv). In some examples, step (iv) occurs before and during step (iii). In some examples, step (iv) occurs during and after step (iii). In some examples step (iv) occurs before, during, and after step (iii). In some examples, step (iv) comprises adding 5 wt% or less, 10 wt% or less, 15 wt% or less, 20 wt% or less, 25 wt% or less, 30 wt% or less, 35 wt% or less, 40 wt% or less, 45 wt% or less, 50 wt% or less, 55 wt% or less, 60 wt% or less, 65 wt% or less, 70 wt% or less, 75 wt% or less, 80 wt% or less, or 80 wt% or more of said one or more crosslinkers to said aqueous solution or aqueous composition. In some examples, step (iv) comprises adding 5 wt% or less, 10 wt% or less, 15 wt% or less, 20 wt% or less, 25 wt% or less, 30 wt% or less, 35 wt% or less, 40 wt% or less, 45 wt% or less, 50 wt% or less, 55 wt% or less, 60 wt% or less, 65 wt% or less, 70 wt% or less, 75 wt% or less, 80 wt% or less, or 80 wt% or more of one or more glyoxal groups to said aqueous solution or aqueous composition. In some instances, the wt% may be a dry weight percentage. In some examples, at least one of said one or more polyacrylamide-based polymers of step (i) has a molecular weight of about 10 million Da or less, about 11 million Da or less, about 12 million Da or less, about 13 million Da or less, about 14 million Da or less, about 15 million Da or less, or about 15 million Da or more. In some examples, step (iii) results in at least one of said one or more polymers having a molecular weight of about 1 million Da or less, about 2 million Da or less, about 3 million Da or less, about 4 million Da or less, about 5 million Da or less, about 6 million Da or less, or about 6 million Da or more. In some examples, steps(i)-(v) occur onsite, i.e., at a location where said composition is intended for use.. In some examples, the amount of degradation agent added may be any amount that results in a desired molecular weight of polymer. In some examples, the amount of degradation agent added may about 50 ppm or less, about 75 ppm or less, about 80 ppm or less, about 100 ppm or less, about 125 ppm or less, about 150 ppm or less, about 175 ppm or less, about 200 ppm or less, about 250 ppm or less, about 300 ppm or less, about 350 ppm or less, about 400 ppm or less, about 450 ppm or less, about 500 ppm or less, or about 500 ppm or more. In some examples, step (v) may comprise adjusting the pH of the solution or composition to a value of about 6.5 to about 8.5.

In some examples, a composition comprising one or more degraded *in situ* gelable polymers may be about an 0.5% active solution or composition, i.e., comprise about 0.5% of active degraded *in situ* gelable polymer. In some examples, the viscosity of a composition which comprises one or more degraded *in situ* gelable polymer may have a viscosity similar to that of water prior to introduction of said solution or composition into a desired location, such as being introduced to a formation downhole. In some examples, the viscosity of a composition which comprises one or more degraded *in situ* gelable polymer may be about 5 mPa·s (5 cPs) or less, about 6 mPa·s (6 cPs) or less, about 7 mPa·s (7 cPs) or less, about 8 mPa·s (8 cPs) or less, about 9 mPa·s (9 cPs) or less, about 10 mPa·s (10 cPs) or less about 12.5 mPa·s (12.5 cPs) or less, about 15 mPa·s (15 cPs) or less, about 20 mPa·s (20 cPs) or less, about 25 mPa·s (25 cPs) or less, about 30 mPa·s (30 cPs) or less, about 35 mPa·s (35 cPs) or less, about 40 mPa·s (40 cPs) or less, about 45 mPa·s (45 cPs) or less, about 50 mPa·s (50 cPs) or less, about 55 mPa·s (55 cPs) or less, about 60 mPa·s (60 cPs) or less, about 65 mPa·s (65 cPs) or less, about 70 mPa·s (70 cPs) or less, about 75 mPa·s (75 cPs) or less, about 80 mPa·s (80 cPs) or less, about 85 mPa·s (85 cPs) or less, about 90 mPa·s (90 cPs) or less, about 95 mPa·s (95 cPs) or less, about 100 mPa·s (100 cPs) or less, or about 100 mPa·s (100 cPs) or more prior to introduction of said solution or composition into a desired location. In some examples, the viscosity of an aqueous solution or aqueous composition which comprises one or more degraded *in situ* gelable polymer may be about 10² mPa·s (10² cPs) or less, about 10² mPa·s (10² cPs) or more, about 10³ mPa·s (10³ cPs) or more, about 10⁴ mPa·s (10⁴ cPs) or more, or about 10⁵ mPa·s (10⁵ cPs) or more, a desired amount of time following introduction of said solution or composition into a desired location. In some examples, after a composition comprising one or more degraded *in situ* gelable polymers is introduced into a desired location, such as by pumping said solution or composition downhole, the solution or composition comprising may increase in viscosity relative to its viscosity prior to introduction. In some examples, after a composition comprising one or more degraded *in situ* gelable polymers is introduced into a desired location, *e.g.,* a formation and/or structure and/or reservoir, such as by pumping said solution or composition downhole, the one or more degraded *in situ* gelable polymers may form a gel. In some examples, the increase in viscosity and/or gel formation may be a result of the conditions downhole, such as, for example, an increased temperature downhole as compared to the temperature on the surface at which said solution or composition comprising said one or more degraded *in situ* gelable polymers was prepared for injection. In some examples, said gel formation may occur after a desired amount of time. In some examples, said gel formation may occur after 5 days or less, 5 days or more, 6 days or more, 7 days or more, 8 days or more, 9 days or more, 10 days or more, 11 days or more, 12 days or more, 13 days or more, 14 days or more, 3 weeks or less, 3 weeks or more, 4 weeks or more, 5 weeks or more, 6 weeks or more, 7 weeks or more, or 8 weeks or more. In some examples, the temperature on the surface, i.e., wherein said degraded *in situ* gelable polymers are prepared is about 25°C. In some examples, the temperature of the reservoir and/or structure and/or formation into which one or more degraded *in situ* gelable polymers may be introduced may be about 30°C or less, 30°C or more, 40°C or more, 50°C or more, 60°C or more, 70°C or more, 80°C or more, 90°C or more, 100°C or more, 110°C or more, or about 120°C or more. In some examples, an increase in temperature may promote gelation of said one or more degraded *in situ* gelable polymers. In some examples, one or more degraded *in situ* gelable polymers may form a gel once in a desired location, such as for example, once in a desired structure and/or formation and/or location downhole, and, once said gel is formed, said gel may be stable for 1 month or less, 1 month or more, 2 months or more, 3 months or more, 4 months or more, 5 months or more, or 6 months or more. In some examples, one or more degraded *in situ* gelable polymers may form a gel once in a desired location, such as for example, once in a desired structure and/or formation and/or location downhole, and, once said gel is formed, said gel may be stable for the lifetime of the structure and/formation and/or location. In some examples, one or more *in situ* gelable polymers may comprise one or more dialdehyde groups, and the dialdehyde groups may participate in crosslinks that may thereby promote gel formation once said one or more degraded *in situ* gelable polymers are present in a desired location. In some examples, one or more degraded *in situ* gelable polymers may be glyoxalated, and the glyoxal groups may participate in crosslinks that may thereby promote gel formation once said one or more *in situ* gelable polymers are present in a desired location. In some examples, a composition comprising one or more *in situ* gelable polymers may not form a gel prior to introduction into a desired location, i.e., said solution or composition may not form a gel when at normal/standard above-ground conditions. In some examples, some gelation of the degraded *in situ* gelable polymer containing solution or composition may occur prior to its introduction into a desired location where *in situ* gelation is desired. In some examples, after gelation, the resultant gelation viscosity or gel strength of a gel formed by a degraded *in situ* gelable polymer may approximate that of a non-degraded GPAM gel, e.g., a non-degraded GPAM gel wherein the GPAM polymer had a molecular weight from about 10 million to about 15 million. In some examples, the resultant gelation viscosity or gel strength and the non-degraded glyoxalated polyacrylamide ("GPAM") gelation viscosity or gel strength may be about 10² mPa·s (10² cPs) or less, about 10² mPa·s (10² cPs) or more, about 10³ mPa·s (10³ cPs) or more, about 10⁴ mPa·s (10⁴ cPs) or more, or about 10⁵ mPa·s (10⁵ cPs) or more.

In some examples, the pH of a composition comprising one or more degraded *in situ* gelable polymers may influence the solution-gelation transition. In some examples, the pH of a solution or composition comprising one or more degraded *in situ* gelable polymers may be from about 6.5 to about 8.5, e.g., 7.8 or 8.2. In some examples, the more alkaline and/or basic the pH of a solution or composition comprising degraded one or more *in situ* gelable polymers, the shorter the duration of time for an increase in viscosity and/or gel formation to occur in said solution and/or composition. In some examples, the more alkaline and/or basic the pH of a solution or composition comprising one or more degraded *in situ* gelable polymers, the longer the duration of time for an increase in viscosity and/or gel formation to occur in said composition. In some examples, any one of the molecular weight of one or more degraded *in situ* gelable polymers, the polymeric formulation of said one or more polymers, the crosslinker dosage, e.g., glyoxal and/or crosslinker dosage, and/or the solution alkalinity levels may effect the solution gelation transition of one or more degraded *in situ* gelable polymers. In some examples, a composition comprising one or more degraded *in situ* gelable polymers may be able to enter formations of 9.87 x 10⁻¹² m² (10 darcies) or more, 9.87 x 10⁻¹² m² (10 darcies) or less, 4.93 x 10⁻¹² m² (5 darcies) or less, 9.87 x 10⁻¹³ m² (1 darcy) or less, or about 4.93 x 10⁻¹³ m² (0.5 darcies) or less. In some examples, said composition may be substantially free of oxygen. In some examples, said composition may be sparged, e.g., sparged with nitrogen. In some examples, said composition may comprise one or more oxygen scavengers, e.g., one or more compounds comprising sulfite and/or bisulfite.

### EXAMPLES

### Example 1: Polymer Comparison

In this example, a sample comprising a degraded *in situ* gelable polymer ("Polymer A") was prepared and compared to a sample comprising degraded polyacrylamide-based polymer ("Polymer B"), and to a sample comprising polyacrylamide-based polymer ("Polymer C"). Sample of Polymer A was prepared as follows. Dry polyacrylamide-based polymer, which comprised an average mole ratio of 70:30 acrylamide:acrylic acid, was dissolved in Pluspetrol MS brine that contained 80 ppm degradation agent (iron II sulfate). Next, 35% weight glyoxal of the total polymer weight, and an amount of alkaline buffer that resulted in a desired pH value, were added to the sample, thereby producing a sample of Polymer A. Sample of Polymer B was prepared by dissolving dry polyacrylamide-based polymer, which comprised an average mole ratio of 70:30 acrylamide:acrylic acid, in Pluspetrol MS brine that contained 80 ppm degradation agent (iron II sulfate). Sample of Polymer C was prepared by dissolving dry polyacrylamide-based polymer, which comprised an average mole ratio of 70:30 acrylamide:acrylic acid in Pluspetrol MS brine. The preparation of both Polymer B and Polymer C resulted in an 0.5% active solution, and the preparation of Polymer A resulted in an 0.57% active solution.

Following their preparation, samples of Polymer A, Polymer B, and Polymer C were compared to one another (see Table 1). The viscosity of each of the Polymer A, Polymer B, and Polymer C samples were measured by a Brookfield viscometer.

| **Polymer Sample** | **Bulk Viscosity** (mPa·s) | **Solution pH** |
|---|---|---|
| Polymer A (Degraded solution with 35wt% glyoxal (0.57% total active)) | 20 (20 cPs) | 7.01 |
| Polymer B (Iron(II) degraded solution (0.5% active)) | 21 (21 cPs) | 7.6 |
| Polymer C (0.5% active solution) | 52 (52 cPs) | 7.8 |

The results presented in Table 1 demonstrated that the sample of Polymer A had a lower viscosity value and lower solution pH as compared to the samples of both Polymer B and Polymer C.

### Example 2: Polymer Gelation

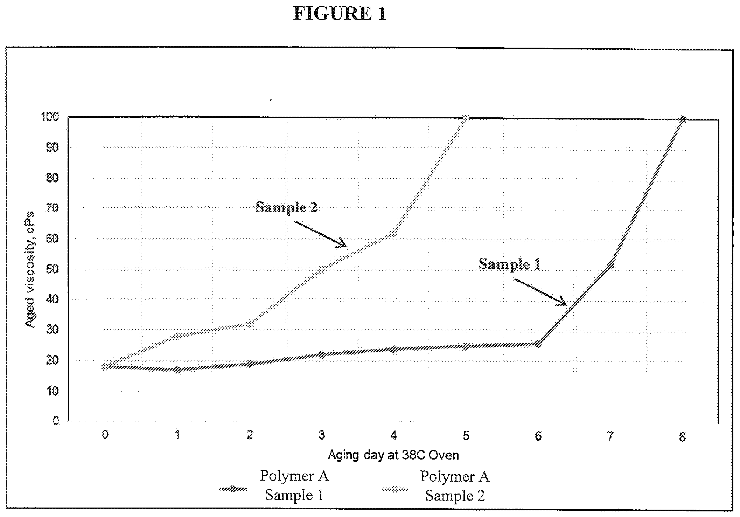

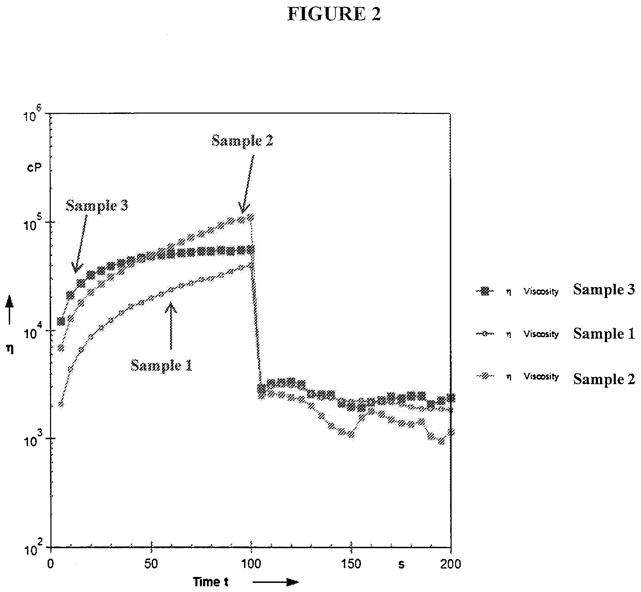

In this example, the solution-gelation transition time, and gel strength, of two different samples (Sample 1 and Sample 2) of Polymer A were measured. Sample 1 of Polymer A was prepared as described in Example 1, with the exception that the pH of Sample 1 was adjusted to 7.8 by addition of an alkaline buffer. Sample 2 of Polymer A was prepared as described in Example 1, with the exception that the pH of Sample 2 was adjusted to 8.2 by addition of an alkaline buffer. Following preparation of Sample 1 and Sample 2 of Polymer A, each sample was aged in an oven at 38°C. During the aging of the samples, the viscosity of Sample 1 and Sample 2 were measured at 24 hour intervals (see **Figure 1****).** A third sample, Sample 3, which was prepared following the above procedure for Polymer A, with the exception that no degradation agent was present in the preparation, was used as a control by aging the sample in the same manner as for Samples 1 and 2, and the resulting gel was used for the measurements of **Figure 2** discussed below.

Referring now to **Figure 1****,** the data of **Figure 1** demonstrated that the pH of the solution affected the solution gel transition. The data of **Figure 1** further demonstrated that Sample 1 formed gels within 8 days under the simulated brine reservoir conditions, and that Sample 2 formed gels within 5 days under the simulated brine reservoir conditions. It was further observed that the gels of Sample 1 and Sample 2 were thermally stable for greater than one month inside the simulated brine reservoir conditions under the elevated temperature (38°C) environment.

After formation of gels by Sample 1, Sample 2, and Sample 3, the gel strengths of each was evaluated using an Anton Paar viscometer. Plate geometry was used to measure Sample 1, Sample 2, and Sample 3 gel viscosities at low shear rate, 0.1s⁻¹, and typical reservoir shear rate, 7^{s-1}. Rheology measurements were performed at 38°C.

Referring now to **Figure 2****,** Sample 1 and Sample 2 demonstrated similar gel strength values a compared to the gel formed by Sample 3 under both shear rate conditions. For example, Samples 1, 2, and 3 all demonstrated greater than 10⁴ mPa·s (10⁴ cPs) at the low shear rate, and greater than 10³ mPa·s (10³ cPs) at the high shear rate.

## Claims

1. A method of effecting *in situ* gelation of one or more degraded *in situ* gelable polymers at a desired location, comprising
(i) providing one or more polyacrylamide-based polymers, wherein said polymers optionally comprise one or more acrylamide monomers and one or more acrylic acid monomers;
(ii) contacting an aqueous solution or aqueous composition, such as a brine, with said one or more polymers;
(iii) contacting said aqueous solution or composition with one or more degradation agents which comprise a ferrous or ferric compound to degrade said one or more polymers into one or more polymers comprising reduced molecular weight fragments;
(iv) contacting said aqueous solution or composition with one or more crosslinkers comprising a glyoxal and/or a glyoxalating agent;
(v) optionally adjusting the pH of said solution or composition to a desired value by adding one or more buffers, such as an alkaline buffer;
(vi) introducing or injecting the resultant degraded *in situ* gelable polymer containing solution or composition into a desired location where *in situ* gelation of said one or more degraded *in situ* gelable polymers is to occur; and
(vii) allowing for or providing conditions at the desired location which permit gelation of the one or more degraded *in situ* gelable polymers to occur over time.

2. The method of claim 1, wherein:
i. said desired location is an anaerobic environment;
ii. said desired location is substantially free of oxygen;
iii. said degraded *in situ* gelable polymer containing solution or composition is substantially free of oxygen;
iv. said degraded *in situ* gelable polymer containing solution or composition is sparged e.g., sparged with nitrogen;
v. said degraded *in situ* gelable polymer containing solution or composition comprises one or more oxygen scavengers, optionally wherein said oxygen scavengers comprise one or more compounds comprising sulfite and/or bisulfite;
vi. said polyacrylamide-based polymer is provided in dry form;
vii. said polyacrylamide-based polymer comprises one or more acrylamide monomers and one or more acrylic acid monomers;
viii. said polyacrylamide-based polymer comprises one or more anionic monomers;
ix. said polyacrylamide-based polymer comprises any one or more of the following: acrylic acid, beta-carboxyethyl acrylate, sodium 1-allyloxy-2-hydroxy propane sulphonate, 3-Allyloxy-2-hydroxypropane sulfonate sodium salt vinylsulfonic acid sodium salt. acrylamide tertiary butyl sulfonic acid "ATBS"; vinylsulfonic acid; 4-styrenesulfonic acid;
x. step (iv) occurs before, during, or after step (iii);
xi. step (iii) occurs before step (iv), and optionally wherein a one hour incubation period occurs after step (iii) and before step (iv);
xii. step (iv) occurs before step (iii);
xiii. step (iv) occurs during step (iii);
xiv. step (iv) occurs after step (iii);
xv. step (v) occurs after steps (i)-(iv);
xvi. step (iv) occurs before and during step (iii);
xvii. step (iv) occurs during and after step (iii);
xviii. step (iv) occurs before, during, and after step (iii);
xix. gelation occurs after a desired amount of time;
xx. gelation occurs after 5 days or less, 5 days or more, 6 days or more, 7 days or more, 8 days or more, 9 days or more, 10 days or more, 11 days or more, 12 days or more, 13 days or more, 14 days or more, 3 weeks or less, 3 weeks or more, 4 weeks or more, 5 weeks or more, 6 weeks or more, 7 weeks or more, or 8 weeks or more;
xxi. at least one of said one or more polymers of step (i) has a molecular weight of 10 million Da or less, 11 million Da or less, 12 million Da or less, 13 million Da or less, 14 million Da or less, 15 million Da or less, or 15 million Da or more;
xxii. step (iii) results in at least one of said one or more polymers having a molecular weight of 1 million Da or less, 2 million Da or less, 3 million Da or less, 4 million Da or less, 5 million Da or less, 6 million Da or less, or more than 6 million Da;
xxiii. the degradation agent comprises one or more of the following: a ferrous salt, a ferric salt, a ferrous salt having an organic anion, a ferrous salt having an inorganic anion, ferrous chloride, ferrous bromide, ferrous fluoride, ferrous sulfate, ammonium iron sulfate, a ferric salt having an organic anion, a ferric salt having an inorganic anion, ferric citrate, ferric chloride, ferric bromide, ferric fluoride, ferric sulfate, and combinations or mixtures thereof;
xxiv. said degradation agent comprises a ferrous compound;
xxv. said degradation agent comprises iron (II) sulfate;
xxvi. crosslinking of said one or more degraded *in situ* gelable polymers occurs following introduction into a desired location;
xxvii. step (iv) comprises adding 5 wt% or less, 10 wt% or less, 15 wt% or less, 20 wt% or less, 25 wt% or less, 30 wt% or less, 35 wt% or less, 40 wt% or less, 45 wt% or less, 50 wt% or less, 55 wt% or less, 60 wt% or less, 65 wt% or less, 70 wt% or less, 75 wt% or less, 80 wt% or less, or 80 wt% or more of said glyoxal and/or glyoxalating agent to said aqueous solution or aqueous composition, optionally wherein the wt% is a dry weight percentage;
xxviii. the desired location or solution or composition comprising the degraded *in situ* gelable polymers comprises one or more conditions or constituents which favor or permit gelation of the degraded *in situ* gelable polymers over time, optionally wherein said conditions or constituents include the molecular weight of the degraded *in situ* gelable polymers; polymer concentration of the degraded *in situ* gelable polymers in the solution or at the location where gelation is to occur; crosslinker dosage or concentration; and alkalinity of the degraded *in situ* gelable polymer containing solution or of the environment where the degraded *in situ* gelable polymer containing solution is introduced;
xxix. some gelation of the degraded *in situ* gelable polymer containing solution or composition has occurred prior to its introduction into a desired location where *in situ* gelation is desired;
xxx. after gelation the resultant gelation viscosity or gel strength approximates that of a non-degraded glyoxalated polyacrylamide "GPAM" gel, optionally wherein the resultant gelation viscosity or gel strength and the non-degraded glyoxalated polyacrylamide "GPAM" gelation viscosity or gel strength are 10² mPa·s (10² cPs) or less, 10² mPa·s (10² cPs) or more, 10³ mPa·s (10³ cPs) or more, 10⁴ mPa·s (10⁴ cPs) or more, or 10⁵ mPa·s (10⁵ cPs) or more;
xxxi. the polyacrylamide-based polymers prior to degradation and/or in situ gelation comprises a backbone comprising a molecular weight of 10 to 15 million;
xxxii. the desired location where *in situ* gelation occurs comprises an aqueous environment, e.g., an alkaline aqueous environment;
xxxiii. the temperature of the desired location is 30°C or less, 30°C or more, 40°C or more, 50°C or more, 60°C or more, 70°C or more, 80°C or more, 90°C or more, 100°C or more, 110°C or more, or 120°C or more;
xxxiv. the resultant gels are stable for 1 month or less, 1 month or more, 2 months or more, 3 months or more, 4 months or more, 5 months or more, or 6 months or more, optionally wherein the resultant gels are stable for about 1-2 months;
xxxv. said desired location is a formation downhole;
xxxvi. said desired location is a location in which gel formation increases sweep efficiency of subsequent polymer floods and/or waterfloods;
xxxvii. said one or more degraded, *in situ* gelable polymers are introduced into an oil reservoir;
xxxviii. at least one of said one or more degraded *in situ* gelable polymers comprise one or more anionic monomers;
xxxix. at least one of said one or more degraded *in situ* gelable polymers comprise acrylic acid;
xl. at least one of said one or more degraded *in situ* gelable polymers comprises one or more acrylamide monomers and one or more anionic monomers;
xli. at least one of said one or more degraded *in situ* gelable polymers comprises from 15 mol percent to 30 mol percent of one or more anionic monomers;
xlii. at least one of said one or more degraded *in situ* gelable polymers comprises about 70 mol% acrylamide and about 30% acrylic acid;
xliii. at least one of said one or more degraded *in situ* gelable polymers comprises one or more glyoxal groups;
xliv. steps (i)-(v) occur onsite;
xlv. the amount of said one or more degradation agents added is an amount that results in a desired molecular weight of polymer;
xlvi. the amount of said degradation agent used to contact said aqueous solution or composition is an amount that results in at least one of said one or more polymers having a molecular weight between about 1 million and about 6 million Da;
xlvii. the amount of said degradation agent used to contact said aqueous solution or composition is 50 ppm or less, 75 ppm or less, 80 ppm or less, 100 ppm or less, 125 ppm or less, 150 ppm or less, 175 ppm or less, 200 ppm or less, 250 ppm or less, 300 ppm or less, 350 ppm or less, 400 ppm or less, 450 ppm or less, 500 ppm or less, or more than 500 ppm;
xlviii. the viscosity of the aqueous solution or aqueous composition which comprises said one or more degraded *in situ* gelable polymers prior to gelation and/or introduction into said desired location has a viscosity of 5 mPa·s (5 cPs) or less, 6 mPa·s (6 cPs) or less, 7 mPa·s (7 cPs) or less, 8 mPa·s (8 cPs) or less, 9 mPa·s (9 cPs) or less, 10 mPa·s (10 cPs) or less 12.5 mPa·s (12.5 cPs) or less, 15 mPa·s (15 cPs) or less, 20 mPa·s (20 cPs) or less, 25 mPa·s (25 cPs) or less, 30 mPa·s (30 cPs) or less, 35 mPa·s (35 cPs) or less, 40 mPa·s (40 cPs) or less, 45 mPa·s (45 cPs) or less, 50 mPa·s (50 cPs) or less, 55 mPa·s (55 cPs) or less, 60 mPa·s (60 cPs) or less, 65 mPa·s (65 cPs) or less, 70 mPa·s (70 cPs) or less, 75 mPa·s (75 cPs) or less, 80 mPa·s (80 cPs) or less, 85 mPa·s (85 cPs) or less, 90 mPa·s (90 cPs) or less, 95 mPa·s (95 cPs) or less, 100 mPa·s (100 cPs) or less, or 100 mPa·s (100 cPs) or more;
xlix. the viscosity of the aqueous solution or aqueous composition which comprises one or more degraded *in situ* gelable polymers increases once introduced into a desired location relative to its viscosity prior to introduction;
l. the viscosity of an aqueous solution or aqueous composition which comprises one or more degraded *in situ* gelable polymer is 10² mPa·s (10² cPs) or less, 10² mPa·s (10² cPs) or more, 10³ mPa·s (10³ cPs) or more, 10⁴ mPa·s (10⁴ cPs) or more, or 10⁵ mPa·s (10⁵ cPs) or more after a desired amount of time has passed following introduction of said solution or composition into said desired location;
li. an increase in temperature promotes gelation of said one or more degraded *in situ* gelable polymers, such as an increase in temperature in a desired location as compared to the temperature prior to introduction of said one or more degraded, *in situ* gelable polymers into said desired location;
lii. glyoxal groups comprised by said one or more degraded *in situ* gelable polymers participate in crosslinks that thereby promote gel formation once said one or more degraded *in situ* gelable polymers are present in a desired location;
liii. the pH of said solution or composition comprising said one or more degraded *in situ* gelable polymers influences the solution-gelation transition;
liv. an increase in alkalinity of said aqueous solution or composition comprising said one or more degraded *in situ* gelable polymers results in an increase or decrease in time until gel formation occurs;
lv. any one of the molecular weight of said one or more degraded *in situ* gelable polymers, the polymeric formulation of said one or more degraded, *in situ* gelable polymers, the glyoxal or crosslinker dosage, and/or the solution alkalinity levels influences the solution gelation transition of said one or more degraded *in situ* gelable polymers;
lvi. said solution or composition comprising said one or more degraded *in situ* gelable polymers enters a formation of 9.87 x 10⁻¹² m² (10 darcies) or more, 9.87 x 10⁻¹² m² (10 darcies) or less, 4.93 x 10⁻¹² m² (5 darcies) or less, 9.87 x 10⁻¹³ m² (1 darcy) or less, or about 4.93 x 10⁻¹³ m² (0.5 darcies) or less, prior to gel formation; or
lvii. said one or more degraded *in situ* gelable polymers are introduced into said desired location as a part of a polymer flood

3. The method of claim 1, wherein said *in situ* gelation of one or more degraded *in situ* gelable polymers is effected at a desired location during enhanced oil recovery, and the enhanced oil recovery method optionally further includes, after effecting gel formation, performing one or more polymer floods and/or one or more waterfloods.

4. The method of any one of the foregoing claims, wherein:
i. said method increases sweep efficiency as compared to a method that did not comprise use of said one or more degraded *in situ* gelable polymers;
ii. said method is used to effect post waterflood mobility control;
iii. said desired location is comprised by low permeable (less than 9.87 x 10⁻¹⁵ m² (10 mD)) reservoirs, such as sandstone reservoirs, and/or heterogenous reservoirs, such as reservoirs that are mostly carbonate;
iv. said desired location is a natural fracture or a vug, and, once in said desired location, the one or more degraded *in situ* gelable polymers form a gel;
v. gel formation increases profile control efficiency as compared to a method that did not comprise use of said one or more degraded *in situ* gelable polymers; and/or
vi. a combination of any two or more of (i)-(v).

5. The method according to claim 3 or claim 4, further comprising after gel formation, effecting one or more polymer floods and/or waterfloods, wherein the oil recovery effected by said one or more polymer floods and/or one or more waterfloods is increased as a result of the gels formed by said one or more degraded *in situ* gelable polymers as compared to a method which did not comprise use of said one or more degraded *in situ* gelable polymers.

6. The method according to any one of claims 1-5, wherein the degradation agent comprises a ferrous compound.

7. The method according to claim 6, wherein the ferrous compound is iron (II) sulfate.

8. The method of any one of the foregoing claims, wherein:
i. said one or more degraded in situ gelable polymers are added to injection water for waterflooding and/or polymer flooding;
ii. said one or more degraded in situ gelable polymers divert injected fluid away from thief zones and into adjacent matrix rock or low-permeability zones, thereby increasing macroscopic sweep efficiency and improving hydrocarbon recovery;
iii. said method enhances production from an oil well, wherein said method comprises: (i) providing a formulation comprising one or more degraded in situ gelable polymers, and (ii) delivering the formulation into the oil well, whereby the formulation improves production from the well; and/or
iv. a combination of any two or more of (i)-(iii).

9. The method according to any one of claims 3-8, further comprising: (i) obtaining or providing a composition comprising one or more degraded in situ gelable polymers; (ii) placing the composition in a subterranean formation downhole; (iii) allowing sufficient time for the one or more degraded in situ gelable polymers to set or gel and (iv) extracting material comprising petroleum from the subterranean formation downhole via a production wellbore.

10. The method according to any one of claims 3-9, wherein said method further provides for remediation of a zone within a subterranean formation bearing heavy/viscous oil to inhibit breakthrough of water from a water injection well via the zone into a production well, the zone comprised of a void space, a halo region, or both, within the zone due to production of the heavy/viscous oil through the production well, the zone thereby allowing for pressure communication between the injection well and the production well, wherein said remediation of the zone comprises: (i) injecting a composition into the zone via the injection well, the composition comprising one or more degraded in situ gelable polymers or a composition as described herein; (ii) allowing the one or more degraded in situ gelable polymers to set or gel for a time sufficient to form a plug which reduces flow communication of water between the injection well and the production well.

11. The method of any one of the foregoing claims, wherein said one or more degraded in situ gelable polymers are prepared on-site.

## Patentansprüche

1. Verfahren zum Bewirken einer *In-situ*-Gelierung eines oder mehrerer abgebauter *in situ* gelierbarer Polymere an einem gewünschten Ort, umfassend
i. Bereitstellen eines oder mehrerer Polymere auf Polyacrylamidbasis, wobei die Polymere gegebenenfalls ein oder mehrere Acrylamidmonomere und ein oder mehrere Acrylsäuremonomere umfassen;
ii. Inkontaktbringen einer wässrigen Lösung oder wässrigen Zusammensetzung, wie einer Sole, mit dem einen oder den mehreren Polymeren;
iii. Inkontaktbringen der wässrigen Lösung oder Zusammensetzung mit einem oder mehreren Abbaumitteln, die eine Eisen(II)- oder Eisen(III)-Verbindung umfassen, um das eine oder die mehreren Polymere zu einem oder mehreren Polymeren abzubauen, die Fragmente mit verringertem Molekulargewicht umfassen;
iv. Inkontaktbringen der wässrigen Lösung oder Zusammensetzung mit einem oder mehreren Vernetzern, die ein Glyoxal und/oder ein Glyoxalierungsmittel umfassen;
v. gegebenenfalls Einstellen des pH-Werts der Lösung oder Zusammensetzung auf einen gewünschten Wert durch Zugeben eines oder mehrerer Puffer, wie eines alkalischen Puffers;
vi. Einbringen oder Injizieren der resultierenden, das abgebaute *in situ* gelierbare Polymer enthaltenden Lösung oder Zusammensetzung an einen gewünschten Ort, an dem die *In-situ*-Gelierung des einen oder der mehreren abgebauten *in situ* gelierbaren Polymere erfolgen soll; und
vii. Ermöglichen oder Bereitstellen von Bedingungen an dem gewünschten Ort, die eine Gelierung des einen oder der mehreren abgebauten *in situ* gelierbaren Polymere im Laufe der Zeit zulassen.

2. Verfahren nach Anspruch 1, wobei:
i. der gewünschte Ort eine anaerobe Umgebung ist;
ii. der gewünschte Ort im Wesentlichen sauerstofffrei ist;
iii. die das abgebaute *in situ* gelierbare Polymer enthaltende Lösung oder Zusammensetzung im Wesentlichen sauerstofffrei ist;
iv. die das abgebaute *in situ* gelierbare Polymer enthaltende Lösung oder Zusammensetzung begast wird, z. B. mit Stickstoff begast wird;
v. die das abgebaute *in situ* gelierbare Polymer enthaltende Lösung oder Zusammensetzung einen oder mehrere Sauerstofffänger umfasst, gegebenenfalls wobei die Sauerstofffänger eine oder mehrere Verbindungen umfassen, die Sulfit und/oder Bisulfit umfassen;
vi. das Polymer auf Polyacrylamidbasis in trockener Form bereitgestellt wird;
vii. das Polymer auf Polyacrylamidbasis ein oder mehrere Acrylamidmonomere und ein oder mehrere Acrylsäuremonomere umfasst;
viii. das Polymer auf Polyacrylamidbasis ein oder mehrere anionische Monomere umfasst;
ix. das Polymer auf Polyacrylamidbasis eines oder mehrere der Folgenden umfasst: Acrylsäure, beta-Carboxyethylacrylat, Natrium-1-allyloxy-2-hydroxypropansulfonat, 3-Allyloxy-2-hydroxypropansulfonat-Natriumsalz, Vinylsulfonsäure-Natriumsalz, Acrylamid-tert-butylsulfonsäure "ATBS"; Vinylsulfonsäure; 4-Styrolsulfonsäure;
x. Schritt (iv) vor, während oder nach Schritt (iii) erfolgt;
xi. Schritt (iii) vor Schritt (iv) erfolgt, und gegebenenfalls wobei nach Schritt (iii) und vor Schritt (iv) eine einstündige Inkubationsphase erfolgt;
xii. Schritt (iv) vor Schritt (iii) erfolgt;
xiii. Schritt (iv) während Schritt (iii) erfolgt;
xiv. Schritt (iv) nach Schritt (iii) erfolgt;
xv. Schritt (v) nach den Schritten (i) bis (iv) erfolgt;
xvi. Schritt (iv) vor und während Schritt (iii) erfolgt;
xvii. Schritt (iv) während und nach Schritt (iii) erfolgt;
xviii. Schritt (iv) vor, während und nach Schritt (iii) erfolgt;
xix. die Gelierung nach einer gewünschten Zeitdauer erfolgt;
xx. die Gelierung nach 5 Tagen oder weniger, 5 Tagen oder mehr, 6 Tagen oder mehr, 7 Tagen oder mehr, 8 Tagen oder mehr, 9 Tagen oder mehr, 10 Tagen oder mehr, 11 Tagen oder mehr, 12 Tagen oder mehr, 13 Tagen oder mehr, 14 Tagen oder mehr, 3 Wochen oder weniger, 3 Wochen oder mehr, 4 Wochen oder mehr, 5 Wochen oder mehr, 6 Wochen oder mehr, 7 Wochen oder mehr oder 8 Wochen oder mehr erfolgt;
xxi. mindestens eines des einen oder der mehreren Polymere von Schritt (i) ein Molekulargewicht von 10 Millionen Da oder weniger, 11 Millionen Da oder weniger, 12 Millionen Da oder weniger, 13 Millionen Da oder weniger, 14 Millionen Da oder weniger, 15 Millionen Da oder weniger oder 15 Millionen Da oder mehr aufweist;
xxii. Schritt (iii) dazu führt, dass mindestens eines des einen oder der mehreren Polymere ein Molekulargewicht von 1 Million Da oder weniger, 2 Millionen Da oder weniger, 3 Millionen Da oder weniger, 4 Millionen Da oder weniger, 5 Millionen Da oder weniger, 6 Millionen Da oder weniger oder mehr als 6 Millionen Da aufweist;
xxiii. das Abbaumittel eines oder mehrere der Folgenden umfasst: ein Eisen(II)-Salz, ein Eisen(III)-Salz, ein Eisen(II)-Salz mit einem organischen Anion, ein Eisen(II)-Salz mit einem anorganischen Anion, Eisen(II)-chlorid, Eisen(II)-bromid, Eisen(II)-fluorid, Eisen(II)-sulfat, Ammoniumeisensulfat, ein Eisen(III)-Salz mit einem organischen Anion, ein Eisen(III)-Salz mit einem anorganischen Anion, Eisen(III)-citrat, Eisen(III)-chlorid, Eisen(III)-bromid, Eisen(III)-fluorid, Eisen(III)-sulfat und Kombinationen oder Mischungen davon;
xxiv. das Abbaumittel eine Eisen(II)-Verbindung umfasst;
xxv. das Abbaumittel Eisen(II)-sulfat umfasst;
xxvi. die Vernetzung des einen oder der mehreren abgebauten *in situ* gelierbaren Polymere nach dem Einbringen an einen gewünschten Ort erfolgt;
xxvii. Schritt (iv) das Zugeben von 5 Gew.-% oder weniger, 10 Gew.-% oder weniger, 15 Gew.-% oder weniger, 20 Gew.-% oder weniger, 25 Gew.-% oder weniger, 30 Gew.- % oder weniger, 35 Gew.-% oder weniger, 40 Gew.-% oder weniger, 45 Gew.-% oder weniger, 50 Gew.-% oder weniger, 55 Gew.-% oder weniger, 60 Gew.-% oder weniger, 65 Gew.- % oder weniger, 70 Gew.-% oder weniger, 75 Gew.-% oder weniger, 80 Gew.-% oder weniger oder 80 Gew.-% oder mehr des Glyoxals und/oder Glyoxalierungsmittels zu der wässrigen Lösung oder wässrigen Zusammensetzung umfasst, gegebenenfalls wobei die Gew.-% Trockengewichtsprozent sind;
xxviii. der gewünschte Ort oder die Lösung oder Zusammensetzung, die die abgebauten *in situ* gelierbaren Polymere umfasst, eine oder mehrere Bedingungen oder Bestandteile umfasst, die eine Gelierung der abgebauten *in situ* gelierbaren Polymere im Laufe der Zeit begünstigen oder zulassen, gegebenenfalls wobei die Bedingungen oder Bestandteile das Molekulargewicht der abgebauten *in situ* gelierbaren Polymere; die Polymerkonzentration der abgebauten *in situ* gelierbaren Polymere in der Lösung oder an dem Ort, an dem die Gelierung erfolgen soll; die Vernetzerdosierung oder - konzentration; und die Alkalität der das abgebaute *in situ* gelierbare Polymer enthaltenden Lösung oder der Umgebung, in die die das abgebaute *in situ* gelierbare Polymer enthaltende Lösung eingebracht wird, einschließen;
xxix. eine gewisse Gelierung der das abgebaute *in situ* gelierbare Polymer enthaltenden Lösung oder Zusammensetzung vor deren Einbringen an einen gewünschten Ort, an dem eine *In-situ*-Gelierung erwünscht ist, erfolgt ist;
xxx. nach der Gelierung die resultierende Gelierungsviskosität oder Gelstärke derjenigen eines nicht abgebauten Gels aus glyoxaliertem Polyacrylamid "GPAM" annähernd entspricht, gegebenenfalls wobei die resultierende Gelierungsviskosität oder Gelstärke und die Gelierungsviskosität oder Gelstärke des nicht abgebauten glyoxalierten Polyacrylamids GPAM 10² mPa·s (10² cPs) oder weniger, 10² mPa·s (10² cPs) oder mehr, 10³ mPa·s (10³ cPs) oder mehr, 10⁴ mPa·s (10⁴ cPs) oder mehr oder 10⁵ mPa·s (10⁵ cPs) oder mehr betragen;
xxxi. die Polymere auf Polyacrylamidbasis vor dem Abbau und/oder der *In-situ*-Gelierung ein Grundgerüst mit einem Molekulargewicht von 10 bis 15 Millionen umfassen;
xxxii. der gewünschte Ort, an dem die *In-situ*-Gelierung erfolgt, eine wässrige Umgebung umfasst, z. B. eine alkalische wässrige Umgebung;
xxxiii. die Temperatur des gewünschten Orts 30 °C oder weniger, 30 °C oder mehr, 40 °C oder mehr, 50 °C oder mehr, 60 °C oder mehr, 70 °C oder mehr, 80 °C oder mehr, 90 °C oder mehr, 100 °C oder mehr, 110 °C oder mehr oder 120 °C oder mehr beträgt;
xxxiv. die resultierenden Gele für 1 Monat oder weniger, 1 Monat oder mehr, 2 Monate oder mehr, 3 Monate oder mehr, 4 Monate oder mehr, 5 Monate oder mehr oder 6 Monate oder mehr stabil sind, gegebenenfalls wobei die resultierenden Gele für etwa 1 bis 2 Monate stabil sind;
xxxv. der gewünschte Ort eine Formation im Bohrloch ist;
xxxvi. der gewünschte Ort ein Ort ist, an dem die Gelbildung die Sweep-Effizienz nachfolgender Polymerflutungen und/oder Wasserflutungen erhöht;
xxxvii. das eine oder die mehreren abgebauten *in situ* gelierbaren Polymere in eine Öllagerstätte eingebracht werden;
xxxviii. mindestens eines des einen oder der mehreren abgebauten *in situ* gelierbaren Polymere ein oder mehrere anionische Monomere umfasst;
xxxix. mindestens eines des einen oder der mehreren abgebauten *in situ* gelierbaren Polymere Acrylsäure umfasst;
xl. mindestens eines des einen oder der mehreren abgebauten *in situ* gelierbaren Polymere ein oder mehrere Acrylamidmonomere und ein oder mehrere anionische Monomere umfasst;
xli. mindestens eines des einen oder der mehreren abgebauten *in situ* gelierbaren Polymere von 15 Mol-% bis 30 Mol-% eines oder mehrerer anionischer Monomere umfasst;
xlii. mindestens eines des einen oder der mehreren abgebauten *in situ* gelierbaren Polymere etwa 70 Mol-% Acrylamid und etwa 30 % Acrylsäure umfasst;
xliii. mindestens eines des einen oder der mehreren abgebauten *in situ* gelierbaren Polymere eine oder mehrere Glyoxalgruppen umfasst;
xliv. die Schritte (i) bis (v) vor Ort erfolgen; xlv. die Menge des einen oder der mehreren zugegebenen Abbaumittel eine Menge ist, die zu einem gewünschten Molekulargewicht des Polymers führt;
xlvi. die Menge des Abbaumittels, die zum Inkontaktbringen mit der wässrigen Lösung oder Zusammensetzung verwendet wird, eine Menge ist, die dazu führt, dass mindestens eines des einen oder der mehreren Polymere ein Molekulargewicht zwischen etwa 1 Million und etwa 6 Millionen Da aufweist;
xlvii. die Menge des Abbaumittels, die zum Inkontaktbringen mit der wässrigen Lösung oder Zusammensetzung verwendet wird, 50 ppm oder weniger, 75 ppm oder weniger, 80 ppm oder weniger, 100 ppm oder weniger, 125 ppm oder weniger, 150 ppm oder weniger, 175 ppm oder weniger, 200 ppm oder weniger, 250 ppm oder weniger, 300 ppm oder weniger, 350 ppm oder weniger, 400 ppm oder weniger, 450 ppm oder weniger, 500 ppm oder weniger oder mehr als 500 ppm beträgt;
xlviii. die Viskosität der wässrigen Lösung oder wässrigen Zusammensetzung, die das eine oder die mehreren abgebauten *in situ* gelierbaren Polymere umfasst, vor der Gelierung und/oder dem Einbringen an den gewünschten Ort eine Viskosität von 5 mPa·s (5 cPs) oder weniger, 6 mPa·s (6 cPs) oder weniger, 7 mPa·s (7 cPs) oder weniger, 8 mPa·s (8 cPs) oder weniger, 9 mPa·s (9 cPs) oder weniger, 10 mPa·s (10 cPs) oder weniger, 12,5 mPa·s (12,5 cPs) oder weniger, 15 mPa·s (15 cPs) oder weniger, 20 mPa·s (20 cPs) oder weniger, 25 mPa·s (25 cPs) oder weniger, 30 mPa·s (30 cPs) oder weniger, 35 mPa·s (35 cPs) oder weniger, 40 mPa·s (40 cPs) oder weniger, 45 mPa·s (45 cPs) oder weniger, 50 mPa·s (50 cPs) oder weniger, 55 mPa·s (55 cPs) oder weniger, 60 mPa·s (60 cPs) oder weniger, 65 mPa·s (65 cPs) oder weniger, 70 mPa·s (70 cPs) oder weniger, 75 mPa·s (75 cPs) oder weniger, 80 mPa·s (80 cPs) oder weniger, 85 mPa·s (85 cPs) oder weniger, 90 mPa·s (90 cPs) oder weniger, 95 mPa·s (95 cPs) oder weniger, 100 mPa·s (100 cPs) oder weniger oder 100 mPa·s (100 cPs) oder mehr aufweist; xlix. die Viskosität der wässrigen Lösung oder wässrigen Zusammensetzung, die ein oder mehrere abgebaute *in situ* gelierbare Polymere umfasst, nach dem Einbringen an einen gewünschten Ort gegenüber ihrer Viskosität vor dem Einbringen zunimmt;
l. die Viskosität einer wässrigen Lösung oder wässrigen Zusammensetzung, die ein oder mehrere abgebaute *in situ* gelierbare Polymere umfasst, 10² mPa·s (10² cPs) oder weniger, 10² mPa·s (10² cPs) oder mehr, 10³ mPa·s (10³ cPs) oder mehr, 10⁴ mPa·s (10⁴ cPs) oder mehr oder 10⁵ mPa·s (10⁵ cPs) oder mehr beträgt, nachdem nach dem Einbringen der Lösung oder Zusammensetzung an den gewünschten Ort eine gewünschte Zeitdauer verstrichen ist;
li. eine Temperaturerhöhung die Gelierung des einen oder der mehreren abgebauten *in situ* gelierbaren Polymere fördert, wie eine Temperaturerhöhung an einem gewünschten Ort im Vergleich zu der Temperatur vor dem Einbringen des einen oder der mehreren abgebauten *in situ* gelierbaren Polymere an den gewünschten Ort;
lii. Glyoxalgruppen, die von dem einen oder den mehreren abgebauten *in situ* gelierbaren Polymeren umfasst sind, an Vernetzungen teilnehmen, die dadurch die Gelbildung fördern, sobald das eine oder die mehreren abgebauten *in situ* gelierbaren Polymere an einem gewünschten Ort vorliegen;
liii. der pH-Wert der Lösung oder Zusammensetzung, die das eine oder die mehreren abgebauten *in situ* gelierbaren Polymere umfasst, den Lösung-Gel-Übergang beeinflusst;
liv. eine Erhöhung der Alkalität der wässrigen Lösung oder Zusammensetzung, die das eine oder die mehreren abgebauten *in situ* gelierbaren Polymere umfasst, zu einer Verlängerung oder Verkürzung der Zeit bis zum Eintreten der Gelbildung führt;
lv. eines von dem Molekulargewicht des einen oder der mehreren abgebauten *in situ* gelierbaren Polymere, der Polymerformulierung des einen oder der mehreren abgebauten *in situ* gelierbaren Polymere, der Glyoxal- oder Vernetzerdosierung und/oder den Alkalitätsniveaus der Lösung den Lösung-Gel-Übergang des einen oder der mehreren abgebauten *in situ* gelierbaren Polymere beeinflusst;
lvi. die Lösung oder Zusammensetzung, die das eine oder die mehreren abgebauten *in situ* gelierbaren Polymere umfasst, vor der Gelbildung in eine Formation von 9,87 x 10⁻¹² m² (10 Darcy) oder mehr, 9,87 x 10⁻¹² m² (10 Darcy) oder weniger, 4,93 x 10⁻¹² m² (5 Darcy) oder weniger, 9,87 x 10⁻¹³ m² (1 Darcy) oder weniger oder etwa 4,93 x 10⁻¹³ m² (0,5 Darcy) oder weniger eintritt; oder
lvii. das eine oder die mehreren abgebauten *in situ* gelierbaren Polymere als Teil einer Polymerflutung an den gewünschten Ort eingebracht werden.

3. Verfahren nach Anspruch 1, wobei die *In-situ-*Gelierung eines oder mehrerer abgebauter *in situ* gelierbarer Polymere an einem gewünschten Ort während einer tertiären Ölförderung bewirkt wird und das Verfahren der tertiären Ölförderung gegebenenfalls ferner nach dem Bewirken der Gelbildung das Durchführen einer oder mehrerer Polymerflutungen und/oder einer oder mehrerer Wasserflutungen einschließt.

4. Verfahren nach einem der vorstehenden Ansprüche, wobei:
i. das Verfahren die Sweep-Effizienz im Vergleich zu einem Verfahren erhöht, das keine Verwendung des einen oder der mehreren abgebauten *in situ* gelierbaren Polymere umfasste;
ii. das Verfahren zum Bewirken einer Mobilitätskontrolle nach der Wasserflutung verwendet wird;
iii. der gewünschte Ort von Lagerstätten mit geringer Permeabilität (weniger als 9,87 x 10⁻¹⁵ m² (10 mD)), wie Sandsteinlagerstätten, und/oder heterogenen Lagerstätten, wie Lagerstätten, die überwiegend aus Karbonat bestehen, umfasst ist;
iv. der gewünschte Ort eine natürliche Kluft oder ein Hohlraum (Vug) ist und das eine oder die mehreren abgebauten *in situ* gelierbaren Polymere, sobald sie sich an dem gewünschten Ort befinden, ein Gel bilden;
v. die Gelbildung die Effizienz der Profilkontrolle im Vergleich zu einem Verfahren erhöht, das keine Verwendung des einen oder der mehreren abgebauten *in situ* gelierbaren Polymere umfasste; und/oder
vi. eine Kombination von beliebigen zwei oder mehr von (i) bis (v).

5. Verfahren nach Anspruch 3 oder Anspruch 4, ferner umfassend, nach der Gelbildung, Bewirken einer oder mehrerer Polymerflutungen und/oder Wasserflutungen, wobei die durch die eine oder die mehreren Polymerflutungen und/oder die eine oder die mehreren Wasserflutungen bewirkte Ölförderung infolge der durch das eine oder die mehreren abgebauten *in situ* gelierbaren Polymere gebildeten Gele im Vergleich zu einem Verfahren erhöht ist, das keine Verwendung des einen oder der mehreren abgebauten *in situ* gelierbaren Polymere umfasste.

6. Verfahren nach einem der Ansprüche 1 bis 5, wobei das Abbaumittel eine Eisen(II)-Verbindung umfasst.

7. Verfahren nach Anspruch 6, wobei die Eisen(II)-Verbindung Eisen(II)-sulfat ist.

8. Verfahren nach einem der vorstehenden Ansprüche, wobei:
i. das eine oder die mehreren abgebauten *in situ* gelierbaren Polymere dem Injektionswasser für die Wasserflutung und/oder Polymerflutung zugegeben werden;
ii. das eine oder die mehreren abgebauten *in situ* gelierbaren Polymere injiziertes Fluid von Diebzonen weg und in angrenzendes Matrixgestein oder Zonen geringer Permeabilität umleiten, wodurch die makroskopische Sweep-Effizienz erhöht und die Kohlenwasserstoffförderung verbessert wird;
iii. das Verfahren die Förderung aus einer Ölbohrung steigert, wobei das Verfahren umfasst: (i) Bereitstellen einer Formulierung, die ein oder mehrere abgebaute *in situ* gelierbare Polymere umfasst, und (ii) Zuführen der Formulierung in die Ölbohrung, wodurch die Formulierung die Förderung aus der Bohrung verbessert; und/oder
iv. eine Kombination von beliebigen zwei oder mehr von (i) bis (iii).

9. Verfahren nach einem der Ansprüche 3 bis 8, ferner umfassend: (i) Erhalten oder Bereitstellen einer Zusammensetzung, die ein oder mehrere abgebaute *in situ* gelierbare Polymere umfasst; (ii) Platzieren der Zusammensetzung in einer unterirdischen Formation im Bohrloch; (iii) Gewähren einer ausreichenden Zeit, damit das eine oder die mehreren abgebauten *in situ* gelierbaren Polymere abbinden oder gelieren, und (iv) Fördern von Erdöl umfassendem Material aus der unterirdischen Formation im Bohrloch über ein Förderbohrloch.

10. Verfahren nach einem der Ansprüche 3 bis 9, wobei das Verfahren ferner eine Sanierung einer Zone innerhalb einer unterirdischen Formation, die schweres/viskoses Öl führt, vorsieht, um einen Durchbruch von Wasser aus einer Wasserinjektionsbohrung über die Zone in eine Förderbohrung zu hemmen, wobei die Zone aus einem Hohlraum, einem Halo-Bereich oder beidem innerhalb der Zone infolge der Förderung des schweren/viskosen Öls durch die Förderbohrung besteht, wobei die Zone dadurch eine Druckkommunikation zwischen der Injektionsbohrung und der Förderbohrung ermöglicht, wobei die Sanierung der Zone umfasst: (i) Injizieren einer Zusammensetzung in die Zone über die Injektionsbohrung, wobei die Zusammensetzung ein oder mehrere abgebaute *in situ* gelierbare Polymere oder eine Zusammensetzung wie hierin beschrieben umfasst; (ii) Gewähren einer ausreichenden Zeit, damit das eine oder die mehreren abgebauten *in situ* gelierbaren Polymere abbinden oder gelieren, um einen Pfropfen zu bilden, der die Strömungskommunikation von Wasser zwischen der Injektionsbohrung und der Förderbohrung verringert.

11. Verfahren nach einem der vorstehenden Ansprüche, wobei das eine oder die mehreren abgebauten *in situ* gelierbaren Polymere vor Ort hergestellt werden.

## Revendications

1. Procédé permettant d'effectuer la gélification *in situ* d'un ou plusieurs polymères dégradés, gélifiables *in situ*, à un emplacement souhaité, comprenant
i. la fourniture d'un ou plusieurs polymères à base de polyacrylamide, dans lequel lesdits polymères comprennent éventuellement un ou plusieurs monomères d'acrylamide et un ou plusieurs monomères d'acide acrylique ;
ii. la mise en contact d'une solution aqueuse ou d'une composition aqueuse, telle qu'une saumure, avec ledit ou lesdits polymères ;
iii. la mise en contact de ladite solution ou composition aqueuse avec un ou plusieurs agents de dégradation comprenant un composé ferreux ou ferrique afin de dégrader ledit ou lesdits polymères en un ou plusieurs polymères comprenant des fragments de poids moléculaire réduit ;
iv. la mise en contact de ladite solution ou composition aqueuse avec un ou plusieurs agents de réticulation comprenant un glyoxal et/ou un agent glyoxalant ;
v. éventuellement le réglage du pH de ladite solution ou composition à une valeur souhaitée en ajoutant un ou plusieurs tampons, tels qu'un tampon alcalin ;
vi. l'introduction ou l'injection de la solution ou de la composition résultante contenant le polymère dégradé gélifiable *in situ* à un emplacement souhaité où doit se produire la gélification *in situ* dudit ou desdits polymères dégradés, gélifiables *in situ* ; et
vii. la création ou la mise en place, à l'emplacement souhaité, des conditions permettant la gélification progressive du ou des polymères dégradés, gélifiables *in situ*.

2. Procédé selon la revendication 1, dans lequel :
i. ledit emplacement souhaité est un environnement anaérobie ;
ii. ledit emplacement souhaité est sensiblement dépourvu d'oxygène ;
iii. ladite solution ou composition contenant un polymère gélifiable *in situ* dégradé est sensiblement dépourvu d'oxygène ;
iv. ladite solution ou composition contenant un polymère gélifiable *in situ* dégradé est barbotée, par exemple barbotée avec de l'azote ;
v. ladite solution ou composition contenant un polymère gélifiable *in situ* dégradé comprend un ou plusieurs piégeurs d'oxygène, éventuellement, dans lequel lesdits piégeurs d'oxygène comprennent un ou plusieurs composés comprenant du sulfite et/ou du bisulfite ;
vi. ledit polymère à base de polyacrylamide est fourni sous forme sèche ;
vii. ledit polymère à base de polyacrylamide comprend un ou plusieurs monomères d'acrylamide et un ou plusieurs monomères d'acide acrylique ;
viii. ledit polymère à base de polyacrylamide comprend un ou plusieurs monomères anioniques ;
ix. ledit polymère à base de polyacrylamide comprend l'un quelconque parmi le ou les composants suivants : l'acide acrylique, l'acrylate de bêta-carboxyéthyle, le sulfonate de sodium de 1-allyloxy-2-hydroxypropane, le sel de sodium du 3-allyloxy-2-hydroxypropane-sulfonate, le sel de sodium de l'acide vinylsulfonique, l'acrylamide-acide tert-butylsulfonique « ATBS » ; l'acide vinylsulfonique ; l'acide 4-styrènesulfonique ;
x. l'étape (iv) a lieu avant, pendant ou après l'étape (iii) ;
xi. l'étape (iii) a lieu avant l'étape (iv), et, éventuellement, dans lequel une période d'incubation d'une heure a lieu après l'étape (iii) et avant l'étape (iv) ;
xii. l'étape (iv) a lieu avant l'étape (iii) ;
xiii. l'étape (iv) a lieu pendant l'étape (iii) ;
xiv. l'étape (iv) a lieu après l'étape (iii) ;
xv. l'étape (v) a lieu après les étapes (i)-(iv) ;
xvi. l'étape (iv) a lieu avant et pendant l'étape (iii) ;
xvii. l'étape (iv) a lieu pendant et après l'étape (iii) ;
xviii. l'étape (iv) a lieu avant, pendant et après l'étape (iii) ;
xix. la gélification a lieu après un laps de temps souhaité ;
xx. la gélification a lieu après 5 jours ou moins, 5 jours ou plus, 6 jours ou plus, 7 jours ou plus, 8 jours ou plus, 9 jours ou plus, 10 jours ou plus, 11 jours ou plus, 12 jours ou plus, 13 jours ou plus, 14 jours ou plus, 3 semaines ou moins, 3 semaines ou plus, 4 semaines ou plus, 5 semaines ou plus, 6 semaines ou plus, 7 semaines ou plus, ou 8 semaines ou plus ;
xxi. au moins l'un parmi ledit ou lesdits polymères de l'étape (i) a un poids moléculaire de 10 millions de Da ou moins, de 11 millions de Da ou moins, de 12 millions de Da ou moins, de 13 millions de Da ou moins, de 14 millions de Da ou moins, de 15 millions de Da ou moins, ou de 15 millions de Da ou plus ;
xxii. l'étape (iii) permet d'obtenir au moins l'un parmi ledit ou lesdits polymères ayant un poids moléculaire de 1 million de Da ou moins, de 2 millions de Da ou moins, de 3 millions de Da ou moins, de 4 millions de Da ou moins, de 5 millions de Da ou moins, de 6 millions de Da ou moins, ou supérieur à 6 millions de Da ;
xxiii. l'agent de dégradation comprend un ou plusieurs parmi ce qui suit : un sel ferreux, un sel ferrique, un sel ferreux comportant un anion organique, un sel ferreux ayant un anion inorganique, chlorure ferreux, bromure ferreux, fluorure ferreux, sulfate ferreux, sulfate ferrique d'ammonium, un sel ferrique ayant un anion organique, un sel ferrique ayant un anion inorganique, citrate ferrique, chlorure ferrique, bromure ferrique, fluorure ferrique, sulfate ferrique, et des combinaisons ou des mélanges de ceux-ci ;
xxiv. ledit agent de dégradation comprend un composé ferreux :
xxv. ledit agent de dégradation comprend du sulfate de fer (II) ;
xxvi. la réticulation dudit ou desdits polymères dégradés, gélifiables *in situ* se produit après leur introduction à l'emplacement souhaité ;
xxvii. l'étape (iv) comprend l'ajout de 5 % en poids ou moins, 10 % en poids ou moins, 15 % en poids ou moins, 20 % en poids ou moins, 25 % en poids ou moins, 30 % en poids ou moins, 35 % en poids ou moins, 40 % en poids ou moins, 45 % en poids ou moins, 50 % en poids ou moins, 55 % en poids ou moins, 60 % en poids ou moins, 65 % en poids ou moins, 70 % en poids ou moins, 75 % en poids ou moins, 80 % en poids ou moins, ou 80 % en poids ou plus dudit glyoxal et/ou dudit agent glyoxalant à ladite solution aqueuse ou composition aqueuse, éventuellement, dans lequel le pourcentage en poids est un pourcentage en poids sec ;
xxviii. l'emplacement, la solution ou la composition souhaités, comprenant les polymères dégradés, gélifiables *in situ* comprend une ou plusieurs conditions ou constituants qui favorisent ou permettent la gélification des polymères dégradés, gélifiables *in situ* au fil du temps, éventuellement, dans lequel lesdites conditions ou lesdits constituants comportent le poids moléculaire des polymères dégradés, gélifiables *in situ* ; la concentration en polymères dégradés, gélifiables *in situ* dans la solution ou à l'emplacement où la gélification doit se produire ; le dosage ou la concentration en agent de réticulation ; et l'alcalinité de la solution contenant les polymères dégradés, gélifiables *in situ* ou de l'environnement où la solution contenant les polymères dégradés, gélifiables *in situ* est introduite ;
xxix. une gélification partielle de la solution ou composition contenant le polymère dégradé, gélifiable *in situ* s'est produite avant son introduction à un emplacement souhaité où la gélification *in situ* est souhaitée ;
xxx. après gélification, la viscosité de gélification ou la résistance du gel obtenues sont proches de celles d'un gel de polyacrylamide glyoxalé « GPAM » non dégradé, éventuellement, dans lequel la viscosité de gélification ou la résistance du gel obtenues et la viscosité de gélification ou de la résistance du gel de polyacrylamide glyoxalé non dégradé, GPAM, sont de 10² mPa·s (10² cPs) ou moins, 10² mPa·s (10² cPs) ou plus, 10³ mPa·s (10³ cPs) ou plus, 10⁴ mPa·s (10⁴ cPs) ou plus, ou 10⁵ mPa·s (10⁵ cPs) ou plus ;
xxxi. les polymères à base de polyacrylamide, avant dégradation et/ou gélification *in situ*, comprennent un squelette comprenant un poids moléculaire de 10 à 15 millions ;
xxxii. l'emplacement souhaité où se produit la gélification *in situ* comprend un environnement aqueux, par exemple un environnement aqueux alcalin ;
xxxiii. la température de l'emplacement souhaité est de 30 °C ou moins, de 30 °C ou plus, de 40 °C ou plus, de 50 °C ou plus, de 60 °C ou plus, de 70 °C ou plus, de 80 °C ou plus, de 90 °C ou plus, de 100 °C ou plus, de 110 °C ou plus, ou de 120 °C ou plus ;
xxxiv. les gels obtenus sont stables pendant 1 mois ou moins, 1 mois ou plus, 2 mois ou plus, 3 mois ou plus, 4 mois ou plus, 5 mois ou plus, ou 6 mois ou plus, éventuellement, dans lequel les gels obtenus sont stables pendant environ 1-2 mois ;
xxxv. ledit emplacement souhaité est une formation située en fond de puits ;
xxxvi. ledit emplacement souhaité est un emplacement dans lequel la formation de gel améliore l'efficacité de balayage des injections ultérieures de polymères et/ou d'eau ;
xxxvii. ledit ou lesdits polymères dégradés, gélifiables *in situ*, sont introduits dans un réservoir de pétrole ;
xxxviii. au moins l'un parmi ledit ou lesdits polymères dégradés, gélifiables *in situ* comprend un ou plusieurs monomères anioniques ;
xxxix. au moins l'un parmi ledit ou lesdits polymères dégradés, gélifiables *in situ* comprend de l'acide acrylique ;
xl. au moins l'un parmi ledit ou lesdits polymères dégradés, gélifiables *in situ* comprend un ou plusieurs monomères d'acrylamide et un ou plusieurs monomères anioniques ;
xli. au moins l'un parmi ledit ou lesdits polymères dégradés, gélifiables *in situ* comprend de 15 % en moles à 30 % en moles d'un ou plusieurs monomères anioniques ;
xlii. au moins l'un parmi ledit ou lesdits polymères dégradés, gélifiables *in situ* comprend environ 70 % en moles d'acrylamide et environ 30 % d'acide acrylique ;
xliii. au moins l'un parmi ledit ou lesdits polymères dégradés, gélifiables *in situ* comprend un ou plusieurs groupes glyoxal ;
xliv. les étapes (i)-(v) on lieu sur place ;
xlv. la quantité dudit ou desdits agents de dégradation ajoutés est une quantité permettant d'obtenir un poids moléculaire souhaité du polymère ;
xlvi. la quantité dudit agent de dégradation mise en contact avec ladite solution ou composition aqueuse est une quantité permettant d'obtenir au moins l'un parmi ledit ou lesdits polymères ayant un poids moléculaire compris entre environ 1 million et environ 6 millions de Da ;
xlvii. la quantité dudit agent de dégradation mise en contact avec ladite solution ou composition aqueuse est de 50 ppm ou moins, 75 ppm ou moins, 80 ppm ou moins, 100 ppm ou moins, 125 ppm ou moins, 150 ppm ou moins, 175 ppm ou moins, 200 ppm ou moins, 250 ppm ou moins, 300 ppm ou moins, 350 ppm ou moins, 400 ppm ou moins, 450 ppm ou moins, 500 ppm ou moins, ou plus de 500 ppm ;
xlviii. la viscosité de la solution aqueuse ou composition aqueuse qui comprend ledit ou lesdits polymères dégradés, gélifiables *in situ* avant la gélification et/ou l'introduction dans ledit emplacement souhaité est de 5 mPa·s (5 cPs) ou moins, 6 mPa·s (6 cPs) ou moins, 7 mPa·s (7 cPs) ou moins, 8 mPa·s (8 cPs) ou moins, 9 mPa·s (9 cPs) ou moins, 10 mPa·s (10 cPs) ou moins, 12,5 mPa·s (12,5 cPs) ou moins, 15 mPa·s (15 cPs) ou moins, 20 mPa·s (20 cPs) ou moins, 25 mPa·s (25 cPs) ou moins, 30 mPa·s (30 cPs) ou moins, 35 mPa·s (35 cPs) ou moins, 40 mPa·s (40 cPs) ou moins, 45 mPa·s (45 cPs) ou moins, 50 mPa·s (50 cPs) ou moins, 55 mPa·s (55 cPs) ou moins, 60 mPa·s (60 cPs) ou moins, 65 mPa·s (65 cPs) ou moins, 70 mPa·s (70 cPs) ou moins, 75 mPa·s (75 cPs) ou moins, 80 mPa·s (80 cPs) ou moins, 85 mPa·s (85 cPs) ou moins, 90 mPa·s (90 cPs) ou moins, 95 mPa·s (95 cPs) ou moins, 100 mPa·s (100 cPs) ou moins, ou 100 mPa·s (100 cPs) ou plus ;
xlix. la viscosité de la solution aqueuse ou composition aqueuse qui comprend un ou plusieurs polymères dégradés, gélifiables *in situ* augmente une fois celle-ci introduite à un emplacement souhaité, par rapport à sa viscosité avant introduction ;
l. la viscosité d'une solution aqueuse ou d'une composition aqueuse qui comprend un ou plusieurs polymères dégradés, gélifiables *in situ* est de 10² mPa·s (10² cPs) ou moins, 10² mPa·s (10² cPs) ou plus, 10³ mPa·s (10³ cPs) ou plus, 10⁴ mPa.s (10⁴ cPs) ou plus, ou 10⁵ mPa.s (10⁵ cPs) ou plus, après qu'un laps de temps souhaité s'est écoulé à compter de l'introduction de ladite solution ou composition à l'emplacement souhaité ;
li. une augmentation de la température favorise la gélification dudit ou desdits polymères dégradés, gélifiables *in situ*, telle qu'une augmentation de la température à un emplacement souhaité par rapport à la température antérieure à l'introduction dudit ou desdits polymères dégradés, gélifiables *in situ* dans ledit emplacement souhaité ;
lii. les groupes glyoxal contenus dans ledit ou lesdits polymères dégradés, gélifiables *in situ* participent à la formation de liaisons transversales qui favorisent ainsi la formation d'un gel dès lors que ledit ou lesdits polymères dégradés, gélifiables *in situ* sont dans un emplacement souhaité ;
liii. le pH de ladite solution ou composition comprenant ledit ou lesdits polymères dégradés, gélifiables *in situ* influence la transition solution-gélification ;
liv. une augmentation de l'alcalinité de ladite solution aqueuse ou composition comprenant ledit ou lesdits polymères dégradés, gélifiables *in situ* entraîne une augmentation ou une diminution du temps nécessaire à la formation du gel ;
lv. l'un quelconque parmi le poids moléculaire dudit ou desdits polymères dégradés, gélifiables *in situ*, la formulation polymère dudit ou desdits polymères dégradés, gélifiables *in situ*, le dosage en glyoxal ou en agent de réticulation, et/ou les niveaux d'alcalinité de la solution, influence la transition de gélification en solution dudit ou desdits polymères dégradés, gélifiables *in situ* ;
lvi. ladite solution ou composition comprenant ledit ou lesdits polymères dégradés, gélifiables *in situ* pénètre dans une formation de 9,87 x 10⁻¹² m² (10 darcies) ou plus, 9,87 x 10⁻¹² m² (10 darcies) ou moins, 4,93 x 10⁻¹² m² (5 darcies) ou moins, 9,87 x 10⁻¹³ m² (1 darcy) ou moins, ou d'environ 4,93 × 10⁻¹³ m² (0,5 darcy) ou moins, avant la formation du gel ; ou
lvii. ledit ou lesdits polymères dégradés, gélifiables *in situ* sont introduits audit emplacement souhaité dans le cadre d'une injection de polymère

3. Procédé selon la revendication 1, dans lequel ladite gélification *in situ* d'un ou plusieurs polymères dégradés, gélifiables *in situ* est effectuée à un emplacement souhaité au cours d'une récupération assistée du pétrole, et le procédé de récupération assistée du pétrole comporte en outre, éventuellement, après avoir effectué la formation du gel, la réalisation d'une ou plusieurs injections de polymère et/ou d'une ou plusieurs injections d'eau.

4. Procédé selon l'une quelconque des revendications précédentes, dans lequel :
i. ledit procédé améliore l'efficacité de balayage par rapport à un procédé qui ne comprend pas l'utilisation dudit ou desdits polymères dégradés, gélifiables *in situ* ;
ii. ledit procédé est utilisé pour effectuer le contrôle de mobilité après injection d'eau ;
iii. ledit emplacement souhaité est constitué de réservoirs à faible perméabilité (inférieure à 9,87 × 10⁻¹⁵ m² (10 mD)), tels que des réservoirs de grès, et/ou de réservoirs hétérogènes, tels que des réservoirs composés principalement de carbonates ;
iv. ledit emplacement souhaité est une fracture naturelle ou une cavité, et, une fois dans ledit emplacement souhaité, le ou les polymères dégradés, gélifiables *in situ* forment un gel ;
v. la formation du gel améliore l'efficacité du contrôle du profil par rapport à un procédé qui ne comprend pas l'utilisation dudit ou desdits polymères dégradés, gélifiables *in situ* ; et/ou
vi. une combinaison de deux ou plusieurs étapes parmi (i)-(v).

5. Procédé selon la revendication 3 ou la revendication 4, comprenant en outre, après la formation du gel, la réalisation d'une ou plusieurs injections de polymère et/ou d'eau, dans lequel la récupération de pétrole effectuée par ladite ou lesdites injections de polymère et/ou ladite ou lesdites injections d'eau est augmentée grâce aux gels formés par ledit ou lesdits polymères dégradés, gélifiables *in situ*, par rapport à un procédé qui ne comprend pas l'utilisation dudit ou desdits polymères dégradés, gélifiables dégradés *in situ*.

6. Procédé selon l'une quelconque des revendications 1-5, dans lequel l'agent de dégradation comprend un composé ferreux.

7. Procédé selon la revendication 6, dans lequel le composé ferreux est du sulfate de fer (II).

8. Procédé selon l'une quelconque des revendications précédentes, dans lequel :
i. ledit ou lesdits polymères dégradés, gélifiables *in situ*, sont ajoutés à l'eau d'injection dans le cadre d'une injection d'eau et/ou d'une injection de polymère ;
ii. ledit ou lesdits polymères dégradés, gélifiables *in situ*, détournent le fluide injecté des zones de fuite vers la roche matricielle adjacente ou vers des zones à faible perméabilité, augmentant ainsi l'efficacité macroscopique du balayage et améliorant la récupération des hydrocarbures ;
iii. ledit procédé améliore la production d'un puits de pétrole, dans lequel ledit procédé comprend : (i) la fourniture d'une formulation comprenant un ou plusieurs polymères dégradables, gélifiables *in situ*, et (ii) l'administration de ladite formulation dans le puits de pétrole, moyennant quoi la formulation améliore la production du puits ; et/ou
iv. une combinaison de deux ou plusieurs éléments parmi (i)-(iii).

9. Procédé selon l'une quelconque des revendications 3-8, comprenant en outre : (i) l'obtention ou la fourniture d'une composition comprenant un ou plusieurs polymères dégradés, gélifiables *in situ* ; (ii) le placement de la composition dans une formation souterraine en fond de puits ; (iii) le fait de laisser suffisamment de temps pour que le ou les polymères dégradés, gélifiables *in situ* prennent ou gélifient ; et (iv) l'extraction de la matière comprenant du pétrole de la formation souterraine en fond de puits par l'intermédiaire d'un puits de production.

10. Procédé selon l'une quelconque des revendications 3-9, dans lequel ledit procédé fournit en outre la remise en état d'une zone située au sein d'une formation souterraine contenant du pétrole lourd/visqueux afin d'empêcher la percée d'eau provenant d'un puits d'injection d'eau par l'intermédiaire de la zone vers un puits de production, la zone étant constituée d'un espace vide, d'une région en halo, ou des deux, à l'intérieur de la zone en raison de la production du pétrole lourd/visqueux par le puits de production, la zone permettant ainsi une communication de pression entre le puits d'injection et le puits de production, dans lequel ladite remise en état de la zone comprend : (i) l'injection d'une composition dans la zone par l'intermédiaire du puits d'injection, la composition comprenant un ou plusieurs polymères dégradés, gélifiables *in situ* ou une composition telle que décrite ici ; (ii) le fait de laisser le ou les polymères dégradés, gélifiables *in situ* prendre ou se gélifier pendant une durée suffisante pour former un bouchon qui réduit la communication de l'écoulement d'eau entre le puits d'injection et le puits de production.

11. Procédé selon l'une quelconque des revendications précédentes, dans lequel ledit ou lesdits polymères dégradés, gélifiables *in situ*, sont préparés sur place.
